# EUROPEAN PATENT APPLICATION

(11) **EP 4 458 237 A1**
(43) Date of publication of application: **06.11.2024**
(21) Application number: 22913304.6
(22) Date of filing: 13.07.2022
(51) Int. Cl.: A47L 11/40

(54) **SELF-CLEANING DUST COLLECTION HOLDER, AND DUST COLLECTION SYSTEM**

(30) Priority: 31.12.2021 CN 202111679687
(71) Applicant: Beijing Roborock Technology Co., Ltd., Beijing 102206 (CN)
(72) Inventor: ZHOU, Yongfei, Beijing 102206 (CN); DUAN, Chuanlin, Beijing 102206 (CN); YANG, Zhimin, Beijing 102206 (CN); LU, Youcheng, Beijing 102206 (CN)
(74) Representative: Cabinet Beau de Loménie
(86) International application number: PCT/CN2022/105560
(87) International publication number: WO 2023/124015

(57) **Abstract**

A self-cleaning dust collection holder and a dust collection system. The self-cleaning dust collection holder comprises a self-cleaning dust collection holder body (2000). The self-cleaning dust collection holder body (2000) comprises: a water storage chamber (2700), which is arranged at the top of the self-cleaning dust collection holder body (2000) and is configured to accommodate a water storage tank; a dust collection chamber (2100), which is arranged at the top end of the self-cleaning dust collection holder body (2000) and side by side with the water storage chamber (2700), and is configured to accommodate a dust collection hood (2800); and an air duct (2500), which is arranged from bottom to top along the self-cleaning dust collection holder body (2000), a dust collection port (6100) located in a base (6000) of the self-cleaning dust collection holder body being in communication with the dust collection chamber (2100) via the air duct (2500). By means of providing the dust collection chamber (2100), the self-cleaning dust collection holder can achieve the technical effect of carrying out one dust removal after multiple cleanings to prevent frequent emptying of a dust box on a cleaning robot, and thus achieving a high cleaning efficiency and an improved user experience.

## Description

### CROSS-REFERENCE TO RELATED APPLICATION

This application is based on and claims priority to Chinese Patent Application No. 202111679687.2, filed on December 31, 2021, the entire content of which is incorporated herein by reference.

### TECHNICAL FIELD

The present disclosure relates to the field of cleaning robot technologies, and particularly to a self-cleaning dust collection holder and a dust collection system.

### BACKGROUND

With the advancement of science and technology in recent years, a variety of cleaning supplies have emerged, reducing the burden of people's work in cleaning and sweeping, meeting people's needs, and adding great convenience to people's lives. People prefer automatic cleaning equipment because of its highly intelligent characteristics.

For the automatic cleaning equipment capable of sweeping and mopping a floor, it can sweep and adsorb dust and debris in an area to be cleaned, and perform wet mopping, after which a user is required to manually dispose of waste in a dust box. Due to a limited space of the dust collection box of a cleaning robot body, it may be necessary to manually clean up the dust collection box at a high frequency during a cleaning process for an area with more dust and debris that is difficult to clean up, which greatly reduces cleaning efficiency. Meanwhile, frequent cleaning up of the dust collection box seriously affects user experience.

### SUMMARY

The present disclosure is directed to provide a self-cleaning dust collection holder which is provided with a dust collection chamber having a relatively large space to avoid frequent cleaning up of a dust collection box on a cleaning robot.

A self-cleaning dust collection holder is provided according to an embodiment of the present disclosure, and includes a self-cleaning dust collection holder body including:
a water storage chamber provided at a top of the self-cleaning dust collection holder body and configured to accommodate a water storage tank;
a dust collection chamber provided, side by side with the water storage chamber, at the top of the self-cleaning dust collection holder body and configured to accommodate a dust collection hood; and
a wind duct provided from bottom to top along the self-cleaning dust collection holder body, wherein a dust collection port on a base of the self-cleaning dust collection holder body and the dust collection chamber are connected through the wind duct.

In some embodiments, a boss is provided in the water storage chamber, is attached to a rear wall of the water storage chamber, and extends upwardly from a bottom of the water storage chamber to a height lower than the rear wall of the water storage chamber; and a plurality of raised openings is formed in a top of the boss, and is configured to be connected to the water storage tank.

In some embodiments, an opening(s) of the water storage chamber and/or the dust collection chamber is/are oriented upward and forward.

In some embodiments, the water storage chamber and the dust collection chamber are formed by the rear wall, a front wall and a side wall of the self-cleaning dust collection holder body in a surrounding manner, wherein the rear wall of the self-cleaning dust collection holder body is higher than the front wall of the self-cleaning dust collection holder body, and the side wall of the self-cleaning dust collection holder body connects the rear wall and the front wall.

In some embodiments, the self-cleaning dust collection holder further includes: a sewage tank and a clean water tank provided side by side on the water storage chamber, and the dust collection hood provided on the dust collection chamber and side by side with the sewage tank and the clean water tank.

In some embodiments, a vertically extending partition is provided in the water storage chamber, and divides the water storage chamber into two parts, one part for accommodating the sewage tank and the other part for accommodating the clean water tank.

In some embodiments, the sewage tank and the clean water tank are partially located outside the water storage chamber when the sewage tank and the clean water tank are assembled in the water storage chamber; and the dust collection hood is partially located outside the dust collection chamber when the dust collection hood is assembled on the dust collection chamber.

In some embodiments, the raised openings include: an air pump opening and a sewage tank connection opening, provided in an upper part of the boss and corresponding to an assembling position of the sewage tank; and a clean water tank connection opening, provided in the upper part of the boss and corresponding to an assembling position of the clean water tank.

In some embodiments, the dust collection hood includes an opening in sealed connection with an end face of the dust collection chamber.

In some embodiments, a washing chamber provided with a forward opening is formed at a lower part of the self-cleaning dust collection holder body, and the washing chamber is adapted to automatic cleaning equipment.

In some embodiments, a washing tank is provided in the washing chamber, and is configured to clean a cleaning part on the automatic cleaning equipment after the automatic cleaning equipment is in adapted connection with the washing chamber.

In some embodiments, the dust collection port and the washing tank are provided, one behind the other, in a substantially parallel manner on the base of the self-cleaning dust collection holder body.

In some embodiments, the self-cleaning dust collection holder further includes: a bottom plate of the self-cleaning dust collection holder detachably connected to the self-cleaning dust collection holder body.

In some embodiments, the wind duct is at least partially provided on a side wall of the self-cleaning dust collection holder body.

**A** dust collection system is provided according to an embodiment of the present disclosure, and includes: automatic cleaning equipment, and the self-cleaning dust collection holder according to any one of the above embodiments.

**A** self-cleaning dust collection holder is provided according to an embodiment of the present disclosure, and includes a self-cleaning dust collection holder body, including: a water storage chamber and a dust collection chamber provided side by side at a top of the self-cleaning dust collection holder body, a water storage tank removably provided in the water storage chamber, and a dust collection hood removably sleeving the dust collection chamber to form a closed dust collection bin for dust collection, wherein in an assembling state, an opening of the water storage tank is oriented upward and an opening of the dust collection hood is oriented downward.

In some embodiments, the water storage chamber and the dust collection chamber are formed by a rear wall, a front wall and a side wall of the self-cleaning dust collection holder body in a surrounding manner, wherein the rear wall of the self-cleaning dust collection holder body is higher than the front wall of the self-cleaning dust collection holder body, and the side wall of the self-cleaning dust collection holder body connects the rear wall and the front wall.

In some embodiments, the water storage tank includes a sewage tank and a clean water tank; and a vertically extending partition is provided in the water storage chamber, and divides the water storage chamber into two parts, one part for accommodating the sewage tank and the other part for accommodating the clean water tank.

In some embodiments, the sewage tank and the clean water tank are partially located outside the water storage chamber when the sewage tank and the clean water tank are assembled in the water storage chamber; and the dust collection hood is partially located outside the dust collection chamber when the dust collection hood is assembled in the dust collection chamber.

In some embodiments, an opening of the dust collection hood is in sealed connection with an end face of the dust collection chamber.

A dust collection system is provided according to an embodiment of the present disclosure, and includes: automatic cleaning equipment, and the self-cleaning dust collection holder according to any one of the above embodiments.

A self-cleaning dust collection holder is provided according to an embodiment of the present disclosure, and includes a self-cleaning dust collection holder body, including: a water storage chamber and a dust collection chamber provided side by side at a top of the self-cleaning dust collection holder body, wherein openings of the water storage chamber and the dust collection chamber are oriented upward and forward; a water storage tank is removably provided in the water storage chamber, and a partial tank body of the water storage tank is located outside the water storage chamber; and a dust collection hood is removably provided in the dust collection chamber, and a partial hood body of the dust collection hood is exposed outside the dust collection chamber.

In some embodiments, the water storage chamber and the dust collection chamber are formed by a rear wall, a front wall and a side wall of the self-cleaning dust collection holder body in a surrounding manner, wherein the rear wall of the self-cleaning dust collection holder body is higher than the front wall of the self-cleaning dust collection holder body, and the side wall of the self-cleaning dust collection holder body connects the rear wall and the front wall.

In some embodiments, the self-cleaning dust collection holder further includes: a sewage tank and a clean water tank provided side by side on the water storage chamber, as well as the dust collection hood provided on the dust collection chamber and side by side with the sewage tank and the clean water tank.

In some embodiments, a vertically extending partition is provided in the water storage chamber, and divides the water storage chamber into two parts, one part for accommodating the sewage tank and the other part for accommodating the clean water tank.

In some embodiments, the sewage tank and the clean water tank are partially located outside the water storage chamber when the sewage tank and the clean water tank are assembled in the water storage chamber; and the dust collection hood is partially located outside the dust collection chamber when the dust collection hood is assembled in the dust collection chamber.

In some embodiments, the dust collection hood includes an opening in sealed connection with an end face of the dust collection chamber.

A dust collection system is provided according to an embodiment of the present disclosure, and includes: automatic cleaning equipment, and the self-cleaning dust collection holder according to any one of the above embodiments.

Compared with the prior art, the embodiments of the present disclosure have the following technical effects.

By providing the dust collection chamber for accommodating the dust collection hood and the water storage chamber for accommodating the water storage tank side by side at the top of the self-cleaning dust collection holder body, space in a height direction of the dust collection holder is reduced, and the dust collection holder body will not be too high to cause unstable center of gravity in the case that volumes of the dust collection chamber and the water storage chamber are ensured to be large enough. The bottom-up design mode of the wind duct reduces the complexity of a wind path, such that the dust collection efficiency can be improved. By sleeving the dust collection chamber with the dust collection hood, the dust collection hood can be more tightly attached to a chamber body of the dust collection chamber by a suction force from a fan in a dust collection process, thereby further enhancing the sealing effect. By partially exposing the water storage tank outside the water storage chamber and partially exposing the dust collection hood outside the dust collection chamber, it is convenient for a user to visually check situations inside the tank body and the hood body through the exposed portions thereof, thereby improving the user experience. In addition, compared with a design mode that the water storage tank is wholly provided in the water storage chamber and the dust collection hood is wholly provided in the dust collection chamber, the exposed design allows the user to take the water storage tank and the dust collection hood out without lifting the two beyond the highest positions of the chamber bodies and then taking them out in translation, such that a user's lifting stroke is reduced, and the user can take the water storage tank and the dust collection hood out of the chamber bodies more easily.

### BRIEF DESCRIPTION OF THE DRAWINGS

The accompanying drawings here are incorporated in the description and constitute a part of the description, show embodiments conforming to the present disclosure, and are used together with the description to explain the principles of the present disclosure. Apparently, the accompanying drawings in the following description show only some embodiments of the present disclosure, and a person of ordinary skill in the art may still derive other drawings from these accompanying drawings without creative efforts. In the accompanying drawings:
FIG. 1 is a schematic diagram of an overall structure of a self-cleaning dust collection holder according to some embodiments of the present disclosure;
FIG. 2 is a schematic structure diagram of a self-cleaning dust collection holder body according to some embodiments of the present disclosure;
FIG. 3 is a schematic structure diagram of a water storage tank in the self-cleaning dust collection holder according to some embodiments of the present disclosure;
FIG. 4 is a side view of the water storage tank in the self-cleaning dust collection holder according to some embodiments of the present disclosure;
FIG. 5 is a schematic structure diagram of an interior of the water storage tank of the self-cleaning dust collection holder according to some embodiments of the present disclosure;
FIG. 6 is a cross-sectional structure diagram of a dust collection bin according to some embodiments of the present disclosure;
FIG. 7 is a structural diagram of an assembly on a top face of a fan of the dust collection bin according to some embodiments of the present disclosure;
FIG. 8 is a structural diagram of a vibration damping hood of the dust collection bin according to some embodiments of the present disclosure;
FIG. 9 is a structural diagram of an assembly on a bottom face of the fan of the dust collection bin according to some embodiments of the present disclosure;
FIG. 10 is a structural diagram of a vibration damping pad of the dust collection bin according to some embodiments of the present disclosure;
FIG. 11 is a front view of a bottom plate of the self-cleaning dust collection holder according to some embodiments of the present disclosure;
FIG. 12 is a side view of the bottom plate of the self-cleaning dust collection holder according to some embodiments of the present disclosure;
FIG. 13 is a three-dimensional structural diagram of the bottom plate of the self-cleaning dust collection holder according to some embodiments of the present disclosure;
FIG. 14 is an overall structure diagram of a self-cleaning dust collection holder and a dust box according to some embodiments of the present disclosure;
FIG. 15 is a section view of a wind duct of the self-cleaning dust collection holder according to some embodiments of the present disclosure;
FIG. 16 is a schematic diagram of an airflow direction of the self-cleaning dust collection holder in a dust collection state according to some embodiments of the present disclosure;
FIG. 17 is a schematic structure diagram of a self-cleaning dust collection holder body according to some embodiments of the present disclosure;
FIG. 18 is a schematic structure diagram of a dust collection chamber according to some embodiments of the present disclosure;
FIG. 19 is a schematic structure diagram of a dust collection hood according to some embodiments of the present disclosure;
FIG. 20 is a section view of the dust collection hood according to some embodiments of the present disclosure;
FIG. 21 is a schematic structure diagram of a dust bag bracket according to some embodiments of the present disclosure;
FIG. 22 is another schematic structure diagram of the dust bag bracket according to some embodiments of the present disclosure;
FIG. 23 is a schematic structure diagram of a dust bag according to some embodiments of the present disclosure;
FIG. 24 is another schematic structure diagram of a dust bag according to some embodiments of the present disclosure;
FIG. 24A is a schematic partial structure diagram of the dust bag according to some embodiments of the present disclosure;
FIG. 24B is a schematic structure diagram of a section plane in FIG. 24A;
FIG. 25 is a schematic diagram of a pre-assembled structure of the dust bag bracket and the dust bag according to some embodiments of the present disclosure;
FIG. 26 is a section view of an assembled structure of the dust bag bracket and the dust bag according to some embodiments of the present disclosure;
FIG. 27 is a schematic diagram of the assembled structure of the dust bag bracket and the dust bag according to some embodiments of the present disclosure;
FIG. 28 is a rear view of the dust bag bracket according to some embodiments of the present disclosure;
FIG. 29 is a schematic structure diagram of a dust collection chamber according to some embodiments of the present disclosure;
FIG. 30 is a schematic structure diagram of a safety valve according to some embodiments of the present disclosure;
FIG. 31 is a schematic cross-sectional structure diagram of the safety valve according to some embodiments of the present disclosure;
FIG. 32 is a schematic partial cross-sectional structure diagram of a dust collection bin and a fan bin according to some embodiments of the present disclosure;
FIG. 33 is a schematic partial cross-sectional structure diagram of the dust collection bin according to some embodiments of the present disclosure;
FIG. 34 is a schematic structure diagram of a waterproof filter according to some embodiments of the present disclosure;
FIG. 35 is a schematic structure diagram of the fan bin according to some embodiments of the present disclosure; and
FIG. 36 is a schematic structure diagram of a silencing structure according to some embodiments of the present disclosure.

### List of reference signs are as follows:

bottom plate 1000 of self-cleaning dust collection holder, self-cleaning dust collection holder body 2000, water storage chamber 2700, dust collection chamber 2100, dust collection bin 3000, sewage chamber 2300, clean water chamber 2400, boss 2600, air pump opening 2610, sewage tank connection opening 2620, clean water tank connection opening 2630, dust collection hood 2800, clean water tank 4000, sewage tank 5000, wind duct 2500, drainage hole 2101, wind duct 2500, wind inlet 2102, drain valve 2103, fixed end 21031, flexible movable end 21032, water blocking structure 2104, first blocking wall 21041, second blocking wall 21042, fan bin 2200, fan channel 2210, fan 2220, vibration damping device 2230, air inlet 2240, air outlet 2250, vibration damping hood 2231, top face 22311 of vibration damping hood, first opening 22312, protruding edge 22313, first projection 22314, second projection 22315, third projection 22316, recess 22317, vibration damping hood side wall 22318, first projection beam 22319, vibration damping pad 2232, second opening 22322, second projection beam 22321, third projection beam 22323, assembly projection 22324, bottom plate body 1100, recessed portion 1121, raised portion 1122, anti-skid structure 1123, lifting structure 1300, wedge-shaped part 1310, first inclined plane 1311, first top face 1313, second inclined plane 1312, roller 1320, inclined plane body 1400, self-cleaning dust collection holder body 2000, dust collection hood 2800, dust collection bin 3000, clean water tank 4000, sewage tank 5000, body base 6000, dust collection port 6100, washing tank 6200, body wind duct 2510, base wind duct 2520, water storage chamber 2700, dust collection hood 2800, dust collection bin 3000, clean water tank 4000, sewage tank 5000, body base 6000, dust collection port 6100, washing tank 6200, dust box 300, dust inlet 310, wind inlet 320, safety valve 2160, safety valve base 2161, safety valve body 2162, safety valve chamber body 2163, base through hole 21611, air inlet 21621 of safety valve, safety valve core 2164, flexible part 2165, first through sub-hole 21611a, second through sub-hole 21611b, blind hole 21641, trigger switch 2166, waterproof filter 2170, clamping slot 2171, first clamping slot wall 21711, second clamping slot wall 21712, support rib 2173, silencing structure 2260, fan hood body 2270, wind outlet 2280 of fan bin, wind exit path 2290, hood body wind outlet 2271, first silencing structure 2261, second silencing structure 2262, silencing shell 2263, silencing material 2264, and silencing hole 22631.

### DETAILED DESCRIPTION

To make the objectives, technical solutions and advantages of the present disclosure clearer, the present disclosure will be further described in detail below with reference to the accompanying drawings. It is obvious that the described embodiments are only part but not all of the embodiments of the present disclosure. All other embodiments obtained by those ordinary skilled in the art without creative efforts based on the embodiments in the present disclosure shall fall within the protection scope of the present disclosure.

The terms used in the embodiments of the present disclosure are for the purpose of describing particular embodiments only and are not intended to limit the present disclosure. The singular forms "a/an", "the" and "said" used in the embodiments of the present disclosure and the appended claims are intended to include the plural forms as well, unless the context clearly indicates otherwise. The term "a plurality of" generally means at least two.

It should be understood that the term "and/or" used herein merely describes an association relationship of associated objects, and indicates that there may be three relationships. For example, A and/or B may indicate three cases: A exists separately, both A and B exist, and B exists separately. In addition, the character "/" herein generally indicates an "or" relationship between the contextual objects.

It should be understood that although the terms first, second, third, etc. may be used to describe elements in the embodiments of the present disclosure, these elements should not be limited to these terms. These terms are only used to distinguish an element from another. For example, "first" may also be referred to as "second" without departing from the scope of the embodiments of the present disclosure. Similarly, "second" may also be referred to as "first".

It should also be noted that the terms "comprises/includes," "contains," or any other variants are intended to cover the nonexclusive containing, such that the commodities or devices including a series of elements not only include those elements, but also include other unclearly listed elements, or also include the inherent elements of such commodities or devices. Without more limitations, the element defined by the phrase "including a ..." does not exclude the existence of other same elements in the commodity or device that including such element.

The optional embodiments of the present disclosure will be described in detail below with reference to the accompanying drawings.

A self-cleaning dust collection holder structure in the prior art is commonly relatively complex, in which a water tank is provided inside a complex hood cover of a self-cleaning dust collection holder, which is difficult to take the water tank out, place it in, or use. In addition, water in the water tank is likely to overflow as a water tank connection opening is formed at the bottom of the water tank, causing a device in the self-cleaning dust collection holder to be damaged very probably. Moreover, since a wind duct of the self-cleaning dust collection holder is too complex, it is difficult for debris to enter a dust collection bin from a dust box.

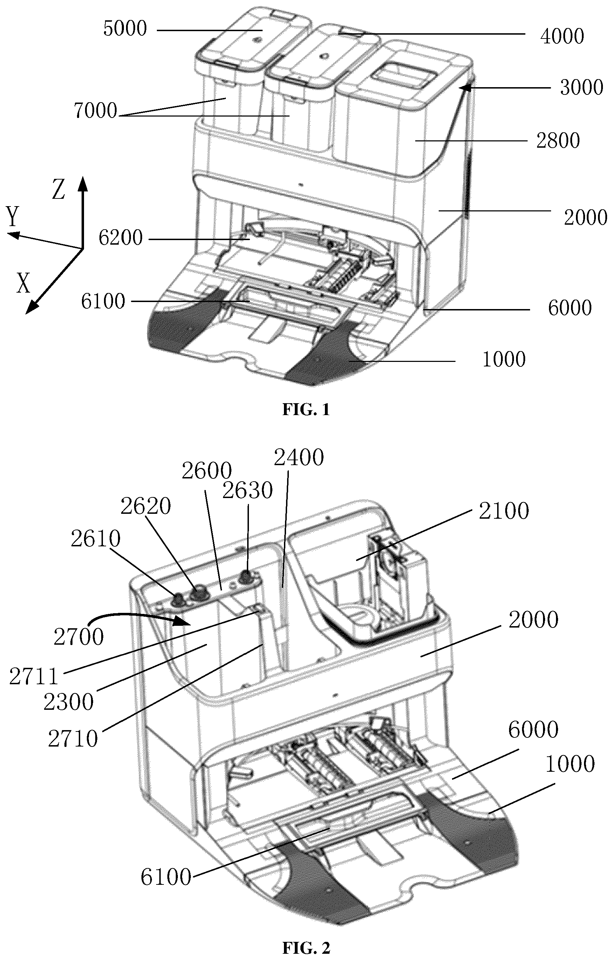

Therefore, a self-cleaning dust collection holder is provided according to an embodiment of the present disclosure. In the self-cleaning dust collection holder, by exposing a water tank and a dust collection hood outside a self-cleaning dust collection holder body, a user can conveniently assemble and use the holder. Meanwhile, by forming a water opening at the top of the self-cleaning dust collection holder body, it is difficult for water to overflow from the water tank. By directly disposing a wind duct on the side wall of the self-cleaning dust collection holder body, a wind duct path is reduced, thereby improving the dust collection efficiency. Specifically, for a self-cleaning dust collection holder according to some embodiments of the present disclosure, for example, FIG. 1 exemplarily shows a schematic diagram of an overall structure of a self-cleaning dust collection holder, and FIG. 2 exemplarily shows a schematic structure diagram of a self-cleaning dust collection holder body according to the present disclosure without a sewage tank, a clean water tank or a dust collection hood.

In order to more clearly describe behaviors of the self-cleaning dust collection holder, the following directions are defined. The self-cleaning dust collection holder may travel along the following three defined axes perpendicular to one another: a transversal axis Y, a front-rear axis X and a central vertical axis Z. A direction opposite to an arrow of the front-rear axis X, namely, a direction in which automatic cleaning equipment enters the self-cleaning dust collection holder, is marked as "backward"; and a direction along the arrow of the front-rear axis X, namely, a direction in which the automatic cleaning equipment leaves the self-cleaning dust collection holder, is marked as "forward". The transversal axis Y is essentially a direction along a width of the self-cleaning dust collection holder body. The vertical axis Z is essentially a direction extending upwardly from the bottom face of the self-cleaning dust collection holder.

As shown in FIG. 1, a direction in which a bottom plate of the self-cleaning dust collection holder protrudes from the self-cleaning dust collection holder body is a forward direction, and a direction in which the bottom plate of the self-cleaning dust collection holder faces a rear wall of the self-cleaning dust collection holder body is a backward direction. A dust collection bin 3000 is located on the left side of the self-cleaning dust collection holder, a clean water tank 4000 is located on the right side of the dust collection bin 3000, and a sewage tank 5000 is located on the right side of the clean water tank 4000.

As shown in FIG. 1, the self-cleaning dust collection holder according to the present embodiment includes a bottom plate 1000 of the self-cleaning dust collection holder, a self-cleaning dust collection holder body 2000, as well as a dust collection hood 2800, a clean water tank 4000 and a sewage tank 5000 which are provided on the self-cleaning dust collection holder body 2000 side by side. The bottom plate 1000 of the self-cleaning dust collection holder is detachably or non-detachably connected to the self-cleaning dust collection holder body 2000, such that the bottom plate 1000 of the self-cleaning dust collection holder and the self-cleaning dust collection holder body 2000 can be conveniently transported and maintained. As shown in FIG. 2, the self-cleaning dust collection holder body 2000 includes a water storage chamber 2700, a dust collection chamber 2100 and a wind duct 2500. The water storage chamber 2700 with an upward and forward opening is provided at the top of the self-cleaning dust collection holder body 2000, and includes a clean water chamber 2400 for accommodating the clean water tank 4000 and a sewage chamber 2300 for accommodating the sewage tank 5000. The dust collection chamber 2100 with an upward and forward opening is provided at the top of the self-cleaning dust collection holder body 2000, is provided side by side with the water storage chamber, and forms the dust collection bin 3000 for accommodating a dust collection hood 2800. The upward and forward design of both the water storage chamber 2700 and the dust collection chamber 2100 facilitates the mounting and removal of the sewage tank 5000, the clean water tank 4000 and the dust collection hood 2800. The structure design that the sewage tank 5000, the clean water tank 4000 and the dust collection hood 2800 are all assembled onto the self-cleaning dust collection holder body 2000 from the above of the front side is in line with user's usage habits. In addition, the upward and forward design is convenient for daily maintenance of devices in the water storage chamber 2700 and in the dust collection chamber 2100.

The self-cleaning dust collection holder body 2000 further includes the wind duct 2500 and a body base 6000. The wind duct 2500 is provided from bottom to top in the self-cleaning dust collection holder body 2000, and a dust collection port on the base of the self-cleaning dust collection holder body 2000 and the dust collection chamber 2100 are connected through the wind duct. With this arrangement, a wind path inside the dust collection chamber is very simple, which can greatly improve the dust collection efficiency.

In one embodiment, the wind duct 2500 is at least partially provided on the side wall of the self-cleaning dust collection holder body 2000, and the body base 6000 at the bottom of the self-cleaning dust collection holder body 2000 and the dust collection chamber 2100 are connected through the wind duct 2500. In a dust collection process, garbage in a dust box enters the wind duct 2500 through the dust collection port of the body base 6000, and enters the dust collection chamber 2100 through the wind duct 2500. The self-cleaning dust collection holder body 2000 is configured to collect the garbage in the dust box of automatic cleaning equipment. The body base 6000 of the self-cleaning dust collection holder includes the dust collection port 6100 configured to be butted with a dust outlet of the automatic cleaning equipment. The garbage in the dust box of the automatic cleaning equipment enters the dust collection bin 3000 of the self-cleaning dust collection holder body 2000 through the dust collection port 6100. The dust collection port 6100 is further surrounded by a sealing rubber pad; and the sealing rubber pad is configured to seal the dust collection port 6100 after it is butted with the dust outlet of the automatic cleaning equipment so as to ensure a dust collection effect and prevent the garbage from being leaked.

As shown in FIG. 2, the water storage chamber 2700 and the dust collection chamber 2100 are formed by the rear wall, a front wall and a plurality of side walls of the self-cleaning dust collection holder body 2000 in a surrounding manner. Rear walls and front walls of both the water storage chamber 2700 and the dust collection chamber 2100 are co-planar respectively, and one of side walls of the water storage chamber and one of side walls of the dust collection chamber are co-planar. The rear wall of the self-cleaning dust collection holder body 2000 is higher than the front wall of the self-cleaning dust collection holder body 2000, and the side walls of the self-cleaning dust collection holder body 2000 connect the rear wall and the front wall. End faces of the side walls of the self-cleaning dust collection holder body 2000 are of arc-shaped structures. The upward and forward design of both the water storage chamber 2700 and the dust collection chamber 2100 facilitates the mounting and removal of the sewage tank 5000, the clean water tank 4000 and the dust collection hood 2800; and the arc-shaped structures ensure the stability and the beautiful appearance of the sewage tank 5000 and the clean water tank 4000 that are mounted to the water storage chamber 270 and the dust collection hood 28000 that is mounted to the dust collection chamber 2100.

The water storage chamber 2700 is configured to accommodate the water storage tank (including the sewage tank 5000 and the clean water tank 4000). A boss 2600 attached to a rear wall of the water storage chamber 2700 and extending upwardly from the bottom of the water storage chamber 2700 to the height lower than the rear wall of the water storage chamber 2700 is provided in the water storage chamber 2700. A plurality of raised openings is formed in the upper part of the boss, may be made of, but not limited to, a soft rubber material, and is configured to be connected to the sewage tank 5000 and the clean water tank 4000 assembled at the corresponding positions. A vertically extending partition 2710 is provided in the water storage chamber 2700, and divides the water storage chamber 2700 into two parts, one part is the sewage chamber 2300 for accommodating the sewage tank 5000, and the other part is the clean water chamber 2400 for accommodating the clean water tank 4000. It should be noted that the upper part of the boss may be the top of the boss, or a side wall of the boss that is higher than the highest water level line position of the clean water tank and the sewage tank in an assembled state, which is not limited herein.

A water outlet or water inlet of a water tank is usually formed at the bottom of the water tank in the prior art, and when the water tank is lifted, a switch of the water outlet is pressed down by the gravity of water to prevent water leakage. But usually, if the switch is stuck or there is not much water in the water tank, the switch is not enough to play a sealing effect, and then, some water will spill out through the water outlet or water inlet in the process of lifting the water tank, causing damage to an external part butted with the water tank. In some embodiments, the raised openings include: an air pump opening 2610, and a sewage tank connection opening 2620 formed at the top end of the boss 2600 and corresponding to an assembling position of the sewage tank 5000. An air pump sucks air in the sewage tank 5000 out through the air pump opening 2610. Since the sewage tank 5000 is of an airtight structure, negative pressure is formed inside the sewage tank 5000 in a process of sucking air out, and sewage in a washing tank is sucked into the sewage tank 5000 through a sewage pipe and the sewage tank connection opening 2620. A clean water tank connection opening 2630 is formed at the top end of the boss 2600 and corresponding to an assembling position of the clean water tank 4000. Under the action of a peristaltic pump, clean water in the clean water tank 4000 flows onto a squeegee part in the washing tank through the clean water tank connection opening 2630 so as to wash a cleaning head of the automatic cleaning equipment. The air pump opening 2610, the sewage tank connection opening 2620 and the clean water tank connection opening 2630 are formed at the top end of the boss 2600, such that the water in the clean water tank or the sewage tank is prevented from overflow out of the tank to flow into the clean water chamber or the sewage chamber during the replacement of the clean water tank or the sewage tank. Compared with the connection at the bottom end of the clean water chamber or the sewage chamber, the sealing connection of the air pump opening 2610, the sewage tank connection opening 2620 and the clean water tank connection opening 2630 with the sewage tank 5000 and the clean water tank 4000 at the top end is more convenient in operation.

**The** self-cleaning dust collection holder further includes the sewage tank 5000 and the clean water tank 4000 provided side by side on the water storage chamber, and the dust collection hood 2800 provided on the dust collection chamber 2100 and side by side with the sewage tank and the clean water tank. Top faces and front faces of the sewage tank, the clean water tank and the dust collection hood are approximately flush respectively. A flat arrangement structure is formed after the sewage tank 5000, the clean water tank 4000 and the dust collection hood 2800 are assembled in the self-cleaning dust collection holder body 2000. Thus, on the one hand, the mounting and removal for use are convenient, and on the other hand, the appearance is flat and beautiful, enhancing the user experience.

After long-term use of the self-cleaning dust collection holder, the raised openings will inevitably be contaminated by sewage generated in washing of the cleaning part, and are left with stains. With the above arrangement, the raised openings on the boss 2600 have an open structure relative to the front wall, and even to the side walls, such that an arm or a cleaning tool can be in contact with the raised openings from all angles, allowing a user to conveniently clean up dirt accumulated near the raised openings.

When the sewage tank 5000 and the clean water tank 4000 are assembled in the water storage chamber, the top faces of the sewage tank and the clean water tank are higher than the rear wall of the self-cleaning dust collection holder body, and thus, tank bodies of the sewage tank and the clean water tank are partially located outside the water storage chamber. When the dust collection hood 2800 is assembled on the dust collection chamber 2100, the top face of the dust collection hood is higher than the rear wall of the self-cleaning dust collection holder body, and thus, most of the dust collection hood is located outside the dust collection chamber. Through the above design, the amount of a material of the self-cleaning dust collection holder body is reduced; and the upper parts of the sewage tank, the clean water tank and the dust collection hood are exposed outside the chambers, such that it is convenient for people to lift carrying handles provided on the tops of the sewage tank, the clean water tank and the dust collection hood to perform operations on the sewage tank, the clean water tank and the dust collection hood, and a technical effect of the beautiful design is also achieved. Meanwhile, with the design that the top of the self-cleaning dust collection holder body is provided with the lower front wall and the higher rear wall, upper locations of the fronts of the sewage tank, the clean water tank and the dust collection hood are also exposed outside the chambers, such that people can conveniently observe water levels in the transparent sewage tank and clean water tank and a situation in the dust collection chamber, and perform operations on the sewage tank, the clean water tank and the dust collection chamber accordingly punctually.

The dust collection hood 2800 includes an opening in sealed connection with an end face of the dust collection chamber 2100. The opening is in sealed connection with the end face of the dust collection chamber 2100, and the sealed connection serves to completely seal the interior of the dust collection bin, facilitating the improvement of the dust collection efficiency.

The lower part of the self-cleaning dust collection holder body 2000 and the body base 6000 together form a washing chamber with an opening facing forwardly, the washing chamber is configured to accommodate the self-cleaning equipment when the self-cleaning equipment returns to the self-cleaning dust collection holder for maintenance operations. The body base 6000 of the self-cleaning dust collection holder is provided with a washing tank 6200 configured to clean the cleaning parts on the automatic cleaning equipment after the automatic cleaning equipment adapts for the washing chamber.

After the automatic cleaning equipment, such as a sweeping robot, returns to the self-cleaning dust collection holder upon sweeping, the automatic cleaning equipment will move along the bottom plate 1000 of the self-cleaning dust collection holder to the body base 6000 to enable the dust outlet of the automatic cleaning equipment to be butted with the dust collection port 6100 on the body base 6000, so as to transfer the garbage in the dust box of the automatic cleaning equipment to the dust collection bin 3000 of the self-cleaning dust collection holder body 2000.

In some embodiments, the body base 6000 and the body 2000 form a non-detachable integral part, and the body base 6000 further includes a dust collection wind path provided in the body base 6000 and configured to recycle the garbage in the automatic cleaning equipment. A wind inlet of the dust collection wind path is the dust collection port, and a wind outlet of the dust collection wind path is connected with the dust collection chamber 2100 through the wind duct 2500.

By disposing the dust collection chamber for accommodating the dust collection hood and the water storage chamber for accommodating the water storage tank side by side at the top end of the self-cleaning dust collection holder body, space in a height direction of the dust collection holder is reduced, and the dust collection holder body will not be too high to cause unstable center of gravity in the case that volumes of the dust collection chamber and the water storage chamber are ensured to be large enough. By sleeving the dust collection chamber with the dust collection hood, the dust collection hood can be more tightly attached to a chamber body of the dust collection chamber by a suction force from a fan in a dust collection process, further enhancing a sealing effect. By exposing the water storage tank outside the water storage chamber and exposing the dust collection hood outside the dust collection chamber, it is convenient for a user to visually check situations inside the tank body and the hood body through the exposed portions thereof, improving the user experience. In addition, compared with a design mode that the water storage tank is wholly provided in the water storage chamber and the dust collection hood is wholly provided in the dust collection chamber, the exposed design allows the user to take the water storage tank and the dust collection hood out without lifting the two beyond the highest positions of the chamber bodies and then taking them out in translation, such that a user's lifting stroke is reduced, and the user can take the water storage tank and the dust collection hood out of the chamber bodies more easily.

A self-cleaning dust collection holder structure in the prior art is commonly relatively complex, in which a water tank is provided inside a complex hood cover of a self-cleaning dust collection holder, which is not easy to take the water tank out, place it in, or use; and in addition, water in the water tank is likely to overflow as a water tank connecting opening is formed at the bottom of the water tank, causing a device in the self-cleaning dust collection holder to be damaged very probably.

Therefore, a self-cleaning dust collection holder is provided according to an embodiment of the present disclosure, in which by exposing at least part of a water tank outside a self-cleaning dust collection holder body, the assembly and disassembly by a user are facilitated; by disposing a water opening of the water tank at the upper part thereof, it is difficult for water to overflow from the water tank, avoiding damage to electronic components by overflowing liquid. The same structure has the same technical effect and part of the technical effect is not repeated herein.

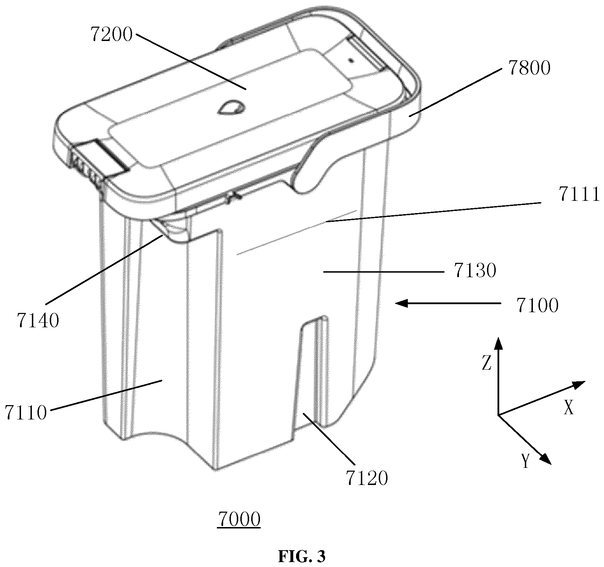

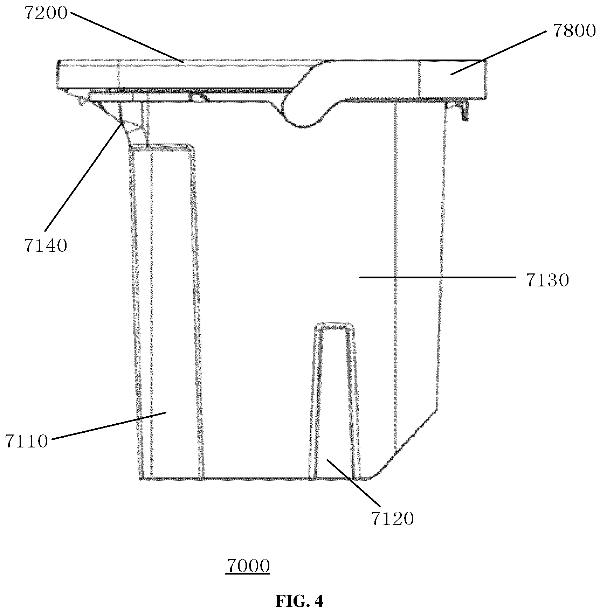

Specifically, for a self-cleaning dust collection holder provided by the embodiments of the present disclosure, for example, FIG. 1 exemplarily shows a schematic diagram of an overall structure of a self-cleaning dust collection holder, FIG. 2 exemplarily shows a schematic structure diagram of a self-cleaning dust collection holder body according to the present disclosure without a sewage tank, a clean water tank or a dust collection hood, and FIGs. 3 to 5 are schematic diagrams of a water storage tank involved in the self-cleaning dust collection holder according to the present disclosure from different views.

As shown in FIG. 1, the self-cleaning dust collection holder provided by the present embodiment includes a bottom plate 1000 of the self-cleaning dust collection holder, a self-cleaning dust collection holder body 2000, and a water storage tank 7000. The bottom plate 1000 of the self-cleaning dust collection holder and the self-cleaning dust collection holder body 2000 are detachably or non-detachably connected to facilitate the transportation and maintenance of the bottom plate 1000 of the self-cleaning dust collection holder and the self-cleaning dust collection holder body 2000. The water storage tank 7000 is assembled at the top end of the self-cleaning dust collection holder body 2000.

As shown in FIG. 2, the self-cleaning dust collection holder body 2000 includes a water storage chamber 2700. The water storage chamber 2700 with an upward and forward opening is provided at the top of the self-cleaning dust collection holder body 2000. The water storage chamber 2700 is configured to accommodate the water storage tank 7000 which may be a clean water tank 4000 or a sewage tank 5000. There may be a plurality of water storage tanks 7000. In some embodiments, the self-cleaning dust collection holder body 2000 includes two water storage tanks 7000, namely, a clean water tank 4000 and a sewage tank 5000, and accordingly, the water storage chamber includes a clean water chamber 2400 for accommodating the clean water tank 4000 and a sewage chamber 2300 for accommodating the sewage tank 5000. With the upward and forward design of the water storage chamber 2700, the water storage tank 7000 can be assembled to the self-cleaning dust collection holder body 2000 from above of the front side. This assembling mode is more in line with the user's usage habits, facilitating the mounting and removal of the water storage tank 7000. In addition, the upward and forward design is convenient for daily maintenance of devices in the water storage chamber 2700.

The water storage chamber 2700 is formed by a rear wall, a front wall and a plurality of side walls of the self-cleaning dust collection holder body 2000 in a surrounding manner. The rear wall of the self-cleaning dust collection holder body 2000 is higher than the front wall of the self-cleaning dust collection holder body 2000, and the side walls of the self-cleaning dust collection holder body 2000 connect the rear wall and the front wall. End faces of the side walls of the self-cleaning dust collection holder body 2000 are of arc-shaped structures. The arc-shaped structures ensure the stability and the beautiful appearance of the water storage tank 7000 mounted to the water storage chamber 2700.

A boss 2600 attached to the rear wall of the water storage chamber 2700 and extending upwardly from the bottom of the water storage chamber 2700 to a height slightly lower than the rear wall of the water storage chamber 2700 is further provided in the water storage chamber 2700. The boss 2600 is higher than the highest water level line of the water storage tank 7000. When the water storage tank 7000 is assembled in the water storage chamber 2700, the boss 2600 receives a water tank protrusion part 7220 of the water storage tank 7000.

A plurality of raised openings is formed in the top of the boss 2600, and is configured to be connected to the water storage tank 7000 assembled at the corresponding position. Specifically, the raised openings are configured to be connected a sewage port or a clean water port on the water storage tank 7000.

In some embodiments, the raised openings include: an air pump connecting opening 2610, and a sewage tank connection opening 2620 formed at the top end of the boss 2600 and corresponding to an assembling position of the sewage tank 5000. An air pump sucks air in the sewage tank 5000 out through the air pump connecting opening 2610. Since the sewage tank 5000 is of an airtight structure, negative pressure is formed inside the sewage tank 5000 in a process of sucking air out, and sewage in a washing tank is sucked into the sewage tank 5000 through a sewage pipe and the sewage tank connection opening 2620.

In some embodiments, the raised openings include a clean water tank connection opening 2630 formed at the top end of the boss 2600 and corresponding to an assembling position of the clean water tank 4000. Under the action of a peristaltic pump, clean water in the clean water tank 4000 flows onto a squeegee part in the washing tank through the clean water tank connection opening 2630 so as to wash a cleaning head of the automatic cleaning equipment.

The air pump opening 2610, the sewage tank connection opening 2620 and the clean water tank connection opening 2630 are formed at the top end of the boss 2600, such that the water in the clean water tank or the sewage tank is prevented from overflow out of the tank to flow into the clean water chamber or the sewage chamber during the replacement of the clean water tank or the sewage tank. Compared with the connection at the bottom end of the clean water chamber or the sewage chamber, the sealing connection of the air pump opening 2610, the sewage tank connection opening 2620 and the clean water tank connection opening 2630 with the sewage tank 5000 and the clean water tank 4000 at the top end is more convenient in operation.

After long-term use of the self-cleaning dust collection holder, the raised openings will inevitably be contaminated by sewage generated in washing of the cleaning part, and are left with stains. With the above arrangement, the raised openings on the boss 2600 have an open structure relative to the front wall, and even to the side walls, such that an arm or a cleaning tool can be in contact with the raised openings from all angles, allowing a user to conveniently clean up dirt accumulated near the raised openings.

In some embodiments, the top of the boss 2600 may be provided with a plurality of soft rubber raised points 2640 that correspondingly match pits 7221 on the lower surface of the water tank protrusion part 7220 of the water storage tank 7000. When the water storage tank 7000 is assembled in the water storage chamber 2700, the soft rubber raised points 2640 on the water storage chamber 2700 are limited to the pits 7221 on the water storage tank 7000. The specific number of the soft rubber raised points 2640 may be set according to actual situations, and the soft rubber raised points 2640 may be symmetrically distributed at the top of the boss 2600. For example, in one embodiment, there are four soft rubber raised points 2640 distributed approximately evenly at the top of the boss 2600. By position limitation through the matching soft rubber projection points 2640 and pits 7221, the position of the water storage tank 7000 in the water storage chamber 2700 can be more precise, avoiding position offset of the water storage tank 7000.

A vertically extending partition 2710 may be further provided in the water storage chamber 2700, and divides the water storage chamber 2700 into two parts, one part is the sewage chamber 2300 for accommodating the sewage tank 5000, and the other part is the clean water chamber 2400 for accommodating the clean water tank 4000. At least one vibration damping pad 2711 is provided at the top end of the partition 2710, and is configured to support a handle when it falls down, so as to reduce the vibration of the handle. The partition 2710 includes at least one position limitation protrusion (not shown) on each side of the partition 2710. Each of the side walls of the sewage tank and the clean water tank that face the partition 2710 includes at least one position limitation depression 7120 matching the at least one position limitation protrusion. After the sewage tank and the clean water tank are assembled in the sewage chamber and the clean water chamber, the position limitation protrusions and the position limitation depressions match for position limitation.

The water storage tank 7000 is detachably assembled at the top end of the self-cleaning dust collection holder body 2000, and specifically, the water storage tank 7000 is detachably assembled in the water storage chamber 2700. With the detachable assembling of the water storage tank 7000 and the upward and forward design of the water storage chamber 2700, the mounting and removal of the water storage tank 7000 are very convenient, facilitating the replacement of a liquid in the water storage tank 7000 daily by the user. The water storage tank 7000 may be made of a transparent material, so as to facilitate observation of a liquid level in the water storage tank 7000.

In some embodiments, when the water storage tank 7000 is assembled in the water storage chamber 2700, the top face of the water storage tank 7000 is higher than the rear wall of the water storage chamber 2700, and most of the tank body of the water storage tank 7000 may be located outside the water storage chamber 2700. The above design can further optimize the mounting and removal of the water storage tank 7000, facilitate the replacement of the liquid in the water storage tank 7000 daily by the user, and reduce the amount of the material of the self-cleaning dust collection holder body 2000. Moreover, with the design that the top of the self-cleaning dust collection holder body 2000 is provided with the lower front wall and the higher rear wall, an upper location of the front of the water storage chamber 2700 is also exposed outside the chamber, such that the user can conveniently observe a water level in the transparent water storage chamber 2700, and perform an operation on the water storage chamber 2700 accordingly punctually.

The water storage tank 7000 may be a clean water tank 4000 or a sewage tank 5000. There may be a plurality of water storage tanks 7000. In some embodiments, the self-cleaning dust collection holder body 2000 includes two water storage tanks 7000, namely, the clean water tank 4000 and the sewage tank 5000. The sewage tank 5000 and the clean water tank 4000 may be provided side by side on the water storage chamber 2700. Top faces and front faces of the sewage tank 5000 and the clean water tank 4000 are approximately flush respectively. A flat arrangement structure is formed after the sewage tank 5000 and the clean water tank 4000 are assembled in the self-cleaning dust collection holder body 2000. Thus, on the one hand, the mounting and removal for use are convenient, and on the other hand, the appearance is flat and beautiful, enhancing the user experience.

The water storage tank 7000 includes an opening for liquid inflow or outflow. The opening is formed in the upper part of the tank body, and is higher than the highest water level line 7111 of the water storage tank 7000. When the water storage tank 7000 is the clean water tank 4000, the opening is a clean water opening; and when the water storage tank 7000 is the sewage tank 5000, the opening is a sewage opening. The opening is higher than the highest water level line of the water storage tank 7000, such that the liquid in the water storage tank 7000 is prevented from overflowing from the water storage tank, especially in the process of the replacement of the liquid in the water storage tank, thereby avoiding damage to an electronic device due to the overflowing liquid.

Referring to FIGs. 3 to 5 together, the water storage tank 7000 includes a water tank accommodating part 7100 and a water tank top cover 7200. The water tank top cover 7200 substantially covers the water tank accommodating part 7100. The water tank accommodating part 7100 includes a water tank body part 7130 and a water tank protrusion part 7140. The water tank top cover 7200 and the water tank accommodating part 7100 together form a chamber body, and the water tank protrusion part 7140 protrudes from the water tank body part 7130, such that the water storage tank is of an L-shaped structure substantially.

The water tank accommodating part 7100 is configured to accommodate liquid. At least one recess extending upwardly along the bottom of the water tank accommodating part is formed on a side wall of the water tank accommodating part 7100, and may match a projection in the water storage chamber 2700 for position limitation. In some specific embodiments, a first recess 7110 extending upwardly along the bottom of the water tank accommodating part to be higher than the highest water level line 7111 and a second recess 7120 extending upwardly along the bottom of the water tank accommodating part to a preset height are formed on side walls of the water tank accommodating part 7100 respectively, and the height of the second recess 7120 is not limited. The first recess 7110 matches at least part of the boss 2600 for position limitation, and the top face of the first recess 7110 forms at least part of the bottom surface of the water tank protrusion part 7140. The top face of the first recess 7110 may include a clean water opening, a sewage opening, a pit 7221 or the like which is connected to the air pump opening 2610, the sewage tank connection opening 2620, the clean water tank connection opening 2630 or the soft rubber raised point 2640 on the boss 2600 in a matching manner; and the second recess 7120 matches the projection on the internal side wall of the water storage chamber 2700 for position limitation. Through the above recess in the water tank accommodating part 7100, the overall position limitation of the water storage tank 7000 can be achieved, such that the water storage tank 7000 can be accurately provided at the corresponding position in the water storage chamber 2700, avoiding the position offset of the water storage tank 7000.

The top cover 7200 covers the upper part of the water tank accommodating part 7100, is detachably connected to the water tank accommodating part 7100, and may be opened or closed relative to the water tank accommodating part 7100. When the top cover 7200 is closed, the liquid in the water tank accommodating part 7100 is isolated from the outside, which can prevent foreign substances from falling into the water storage tank 7000. Optionally, when the top cover 7200 is closed, the top cover 7200 is in airtight contact with the water tank accommodating part 7100, and the top cover 7200 and the water tank accommodating part 7100 together form an airtight structure.

A clean water opening, a sewage opening, a pit 7221 or the like is formed in the lower surface of the water tank protrusion part 7140. When the water storage tank 7000 is a sewage tank 5000, the sewage opening is formed in the lower surface of the water tank protrusion part 7140. When the water storage tank 7000 is a clean water tank 4000, the clean water opening is formed in the lower surface of the water tank protrusion part 7140. When the water storage tank 7000 is assembled in the water storage chamber 2700, the water tank protrusion part 7140 is just received by the boss 2600 in the water storage chamber 2700, and the sewage opening or the clean water opening in the lower surface of the water tank protrusion part 7140 is connected to the raised opening at the top of the boss 2600.

In some embodiments, the water storage tank 7000 is the sewage tank 5000, and an air pump connector is further provided on the lower surface of the water tank protrusion part 7140, and is connected to the air pump connecting opening 2610 in the top of the boss 2600. After the air pump connecting opening 2610 is connected to the air pump connector, sewage may be sucked into the sewage tank 5000. In some embodiments, an air pump sucks air in the sewage tank 5000 out through the air pump connecting opening 2610 and the air pump connector. Since the sewage tank 5000 is of an airtight structure, negative pressure is formed inside the sewage tank 5000 in a process of sucking air out, and the sewage in the washing tank is sucked into the sewage tank 5000 through a sewage pipe and the sewage tank connection opening 2620.

A plurality of pits 7221 may be further formed on the lower surface of the water tank protrusion part 7140. When the water storage tank 7000 is assembled in the water storage chamber 2700, the water tank protrusion part 7140 is just received by the boss 2600 in the water storage chamber 2700, and the plurality of pits 7221 on the lower surface of the water tank protrusion part 7140 matches the soft rubber raised points at the top of the boss 2600, such that the position limitation of the water storage tank 7000 is achieved. By position limitation through the matching soft rubber projection points 2640 and the pits 7221, the position of the water storage tank 7000 in the water storage chamber 2700 can be more precise, avoiding position offset of the water storage tank 7000.

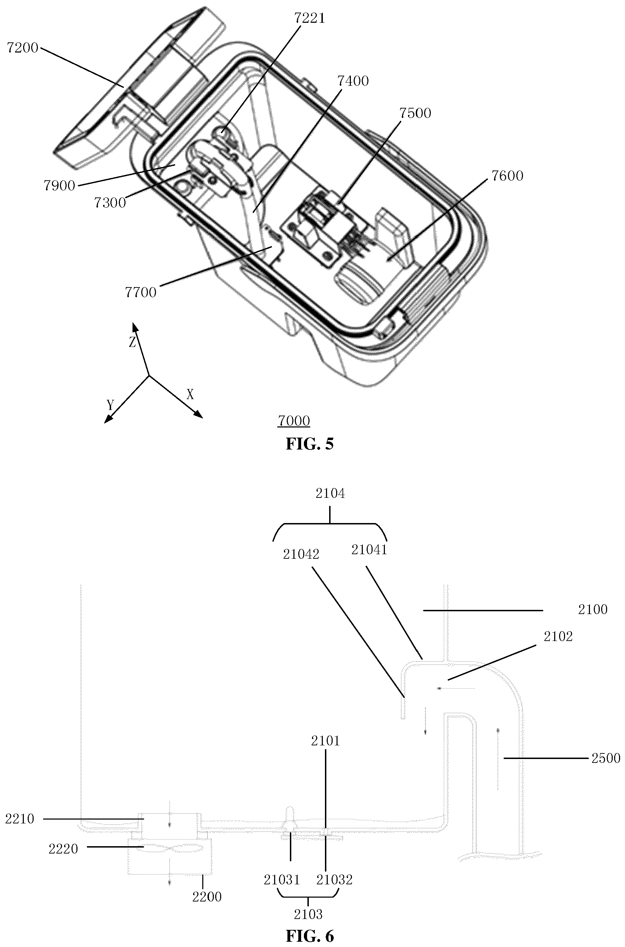

As shown in FIG. 5, in some embodiments, the water storage tank 7000 is the clean water tank 4000, in which case the water storage tank 7000 may further include a water pipe bracket 7300 and a water pipe 7400. The water pipe bracket 7300 is provided on a raised structure 7900 in the clean water tank 4000, and the raised structure 7900 is formed correspondingly with respect to a first recess 7110, and is higher than the highest water level line of the clean water tank 4000. The water pipe 7400 extends from the water pipe bracket 7300 to the bottom of the clean water tank 4000, and liquid may flow to the outside of the clean water tank 4000 through the water pipe 7400. The water pipe 7400 includes a water pipe inlet and a water pipe outlet. The water pipe inlet is located at the bottom of the clean water tank 4000, and the water pipe outlet is located at the water pipe bracket 7300, and may be connected to the clean water opening of the clean water tank 4000.

In some embodiments, the water storage tank 7000 is the clean water tank 4000, in which case the water storage tank 7000 may further include a floating ball base 7500 and a floating ball 7600. The floating ball base 7500 is provided at the bottom of the clean water tank 4000, and is configured for placement of the floating ball 7600. The floating ball 7600 is connected to the floating ball base 7500, may rotate around a fixed shaft on the floating ball base 7500, and is configured to detect a water level in the tank.

In some embodiments, the water storage tank 7000 is the clean water tank 4000, in which case the water storage tank 7000 may further include a filter 7700. The filter 7700 is provided at the end of the water pipe inlet, and is configured to filter the liquid before it enters the water pipe 7400.

The water storage tank 7000 may further include a handle 7800. The handle 7800 may be hinged to the top of the water storage tank 7000. By disposing the handle 7800, the mounting and removal of the water storage tank 7000 are very convenient, facilitating the replacement of liquid in the water storage tank 7000 daily by the user.

The self-cleaning dust collection holder is provided according to an embodiment of the present disclosure, in which by exposing at least part of a water tank outside a self-cleaning dust collection holder body, the assembly and disassembly by a user are facilitated; by disposing a water opening of a water tank at the upper part thereof, it is difficult for water to overflow from the water tank, avoiding damage to electronic components by overflowing liquid.

**In** the related art, the fan of the self-cleaning dust collection holder is provided in the fan bin which is provided at the bottom of the dust collection bin. A ventilation hole is formed in the bottom of the dust collection bin. A suction force generated by the fan during working sucks air in the dust collection bin out, and the air is discharged outside the self-cleaning dust collection holder body 2000 through the wind duct in the fan bin. As the distance between the dust collection port and the washing tank is relatively close, the robot may bring residual water in the washing tank into the dust collection port in a process that the robot climbs on or leaves a pile. If the water volume is too large, the fan may suck the water into the dust collection bin through the wind duct when working, and excessive accumulated water in the dust collection bin may cause damage to the fan and an electric shock risk.

Therefore, a self-cleaning dust collection holder is provided according to an embodiment of the present disclosure, in which by forming a drainage hole at the bottom of a dust collection bin, liquid entering the dust collection bin can be conveniently discharged punctually. The same structure has the same technical effect, and part of the technical effect is not repeated herein. Specifically, as shown in FIG. 6, a self-cleaning dust collection holder includes a bottom plate 1000 of the self-cleaning dust collection holder and a self-cleaning dust collection holder body 2000, and the bottom plate 1000 is detachably or non-detachably connected to the self-cleaning dust collection holder body 2000, which is convenient for transportation. The self-cleaning dust collection holder body 2000 includes a dust collection chamber 2100, a dust collection hood 2800 covers the dust collection chamber 2100 to form the dust collection bin 3000, and the dust collection chamber 2100 is integrally provided at the top end of the self-cleaning dust collection holder body 2000. The top end of the self-cleaning dust collection holder body 2000 is recessed inwardly to form the dust collection chamber 2100 for accommodating various components for dust collection. The dust collection chamber 2100 includes a drainage hole 2101 formed in the bottom of the dust collection chamber, there may be one or more drainage holes 2101 provided according to internal space of the dust collection chamber 2100, and usually formed at relatively low positions of the bottom of the dust collection chamber for facilitating liquid discharge. The self-cleaning dust collection holder body 2000 further includes a wind duct 2500, one end of the wind duct 2500 is connected with a dust collection port 6100 of a body base 6000, and the other end of the wind duct 2500 is connected with the dust collection chamber 2100. The side wall of the dust collection chamber 2100 includes a wind inlet 2102 which is connected with the dust collection port 6100 of the body base 6000 through the wind duct 2500, and the wind duct is formed on the side wall of the self-cleaning dust collection holder body 2000 and extends downward to pass through the body base 6000 to be connected with the dust collection port 6100 on the body base 6000. When the self-cleaning dust collection holder is in a dust collection state, an airflow inside the dust collection bin 3000 is connected with the outside of the dust collection bin 3000 through the wind duct 2500, and the drainage hole 2101 is not connected with the outside of the dust collection bin 3000, so as to ensure that sufficient negative pressure is formed in the dust collection bin to suck garbage in a dust box into a dust collection bag through the dust collection port and the wind duct. When the self-cleaning dust collection holder is in a non-dust collection state, the wind inlet inside the dust collection bin 3000 is closed, such that the airflow inside the dust collection bin 3000 is not connected with the outside of the dust collection bin 3000, and the drainage hole 2101 is connected with the outside of the dust collection bin 3000. In such a case, if there is a liquid, such as water on a mop cloth, entering the dust collection bin 3000 through the wind duct in the dust collection process, it will flow out of the dust collection bin 3000 after the drainage hole 2101 is opened, avoiding damage to the components, especially a fan, in the dust collection bin.

In some embodiments, the dust collection bin 3000 further includes a drainage valve 2103 provided on an outer side of the bottom of the dust collection bin 3000 near an outlet of the drainage hole 2101. When the self-cleaning dust collection holder is in the dust collection state, the drainage valve 2103 closes the drainage hole by negative pressure in the bin, such that the drainage hole 2101 is prevented from being connected with the outside of the dust collection bin 3000. When the self-cleaning dust collection holder is in the non-dust collection state, the drainage valve 2103 opens the drainage hole 2101 by gravity, such that the drainage hole 2101 can be connected with the outside of the dust collection bin 3000.

In some embodiments, the drainage valve 2103 includes a fixed end 21031 and a flexible movable end 21032. The fixed end 21031 is fixedly mounted on the outer side of the bottom of the dust collection bin 3000 by a screw, bonding, clamping, etc. The flexible movable end 21032 that can switch between an open state and a close state is provided at the outlet of the drainage hole 2101, and is made of rubber, plastic and other soft rubber plug materials. In a normal state, the drainage hole 2101 is in an open state, if there is water at the bottom of the dust collection bin 3000, it will be automatically discharged from the drainage hole 2101. When the fan is running, negative pressure is formed in the dust collection bin 3000, and the flexible movable end 21032 is automatically attached to the outside of the drainage hole to achieve sealing. After the fan stops, the flexible movable end 21032 will automatically open by the gravity; and if there is any water in the dust collection bin 3000, it will be discharged through the drainage hole 2101 again.

In some embodiments, the side wall of the dust collection bin 3000 includes a water blocking structure 2104. The water blocking structure 2104 is provided at the edge of the wind inlet 2102, and configured to block liquid entering from the wind inlet. Specifically, the water blocking structure 2104 includes a first blocking wall 21041 extending transversely along the edge of the wind inlet 2102 and a second blocking wall 21042 extending downwardly, and the first blocking wall 21041 and the second blocking wall 21042 form a wind inlet area. In some embodiments, the second blocking wall 21042 at least extends downwardly to the lower edge of the wind inlet 2102 to block the liquid entering from the wind inlet 2102.

In some embodiments, the self-cleaning dust collection holder body 2000 further includes a fan bin 2200, a fan channel 2210 and a fan 2220. The fan bin 2200 is provided below the dust collection bin 3000 and is configured to accommodate the fan. The fan channel 2210 is configured to communicate the fan bin with the dust collection bin, so as to provide a suction wind force to the dust collection bin through the fan. The fan 2220 is provided in the fan bin, and is controlled to be turned on and off under the control of a control system to provide the suction wind force required for dust collection. In some embodiments, the fan channel 2210 extends upwardly along the bottom of the dust collection bin 3000 by a preset distance, such that the fan channel 2210 protrudes from the bottom of the dust collection bin 3000. Thus, the fan is protected from damage caused by the liquid entering the dust collection bin 3000 that is not discharged punctually.

The self-cleaning dust collection holder body according to the present embodiment includes the dust collection bin. The dust collection bin includes the drainage hole formed in the bottom of the dust collection bin, and the wind duct with one end connected with the bottom plate and the other end connected with the dust collection bin. When the self-cleaning dust collection holder is in the dust collection state, the wind duct is connected with the outside of the dust collection bin, and the drainage hole is not connected with the outside of the dust collection bin, such that a negative pressure state in the dust collection bin is ensured, thereby facilitating a dust collection operation. When the self-cleaning dust collection holder is in the non-dust collection state, the drainage hole is connected with the outside of the dust collection bin, such that the water entering the dust collection bin can be discharged punctually, thereby avoiding damage to devices in the dust collection bin.

In the related art, the fan in the self-cleaning dust collection holder causes relatively large vibration due to its own rotation in the dust collection process, which will damage a wall of a fan bin in contact with the fan, and also bring great noise.

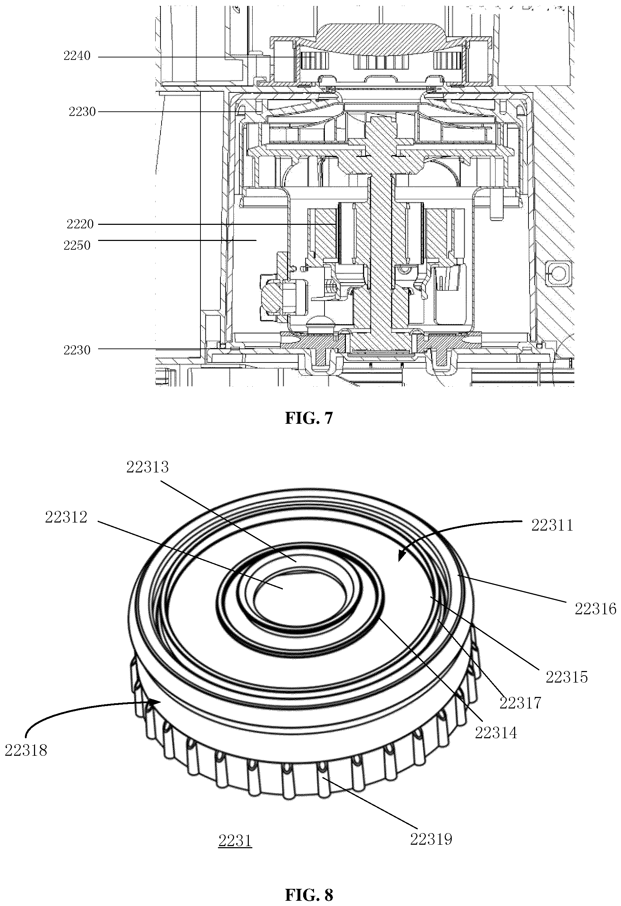

Therefore, a self-cleaning dust collection holder is provided according to an embodiment of the present disclosure, in which a plurality of vibration damping devices is provided in a fan bin to reduce the vibration caused by the rotation of a fan. The same structure has the same technical effect, and part of the technical effect is not repeated herein. Specifically, as shown in FIG. 7, a self-cleaning dust collection holder includes a bottom plate 1000 of the self-cleaning dust collection holder and a self-cleaning dust collection holder body 2000. The bottom plate 1000 of the self-cleaning dust collection holder is detachably or non-detachably connected to the self-cleaning dust collection holder body 2000. The self-cleaning dust collection holder body 2000 includes a fan bin 2200, a fan 2220 and vibration damping devices 2230. The fan bin 2200 is integrally provided inside the self-cleaning dust collection holder body 2000, and includes an air inlet 2240 and an air outlet 2250. The air inlet 2240 is configured to be connected with a dust collection bin 3000 through the fan channel 2210; and air in the dust collection bin 3000 is sucked out by the rotation of the fan, thus ensuring negative pressure in the dust collection bin 3000. The sucked air enters the fan channel through the air inlet 2240, and then is discharged through the air outlet 2250. The fan 2220 is provided in the fan bin 2200, and is controlled to rotate clockwise or anticlockwise under the control of the control system. The vibration damping devices 2230 are mounted on at least part of the outer surface of the fan 2220 to reduce the vibration of the fan 2220. The vibration damping device 2230 may be made of flexible materials such as rubber and plastic.

In some embodiments, specifically, as shown in FIG. 8, the vibration damping device 2230 includes a vibration damping hood 2231 which is assembled to at least part of the top end of the fan 2220 to reduce the vibration of the fan. The shape of the vibration damping hood 2231 matches a top end structure of the fan, enabling the vibration damping hood 2231 to just cover the top end of the fan. Specifically, in some embodiments, the vibration damping hood 2231 includes a vibration damping hood top face 22311. The vibration damping hood top face 22311 includes a first opening 22312 matching the air inlet 2240, and a sealing vibration damping member, specifically a protruding edge 22313, extending outward along the first opening 22312, and is assembled between the top end of the fan 2220 and the air inlet 2240, so as to reduce the vibration of the fan. In some embodiments, with the increase of an outward extension distance of the protruding edge 22313, an opening area of the protruding edge increases continuously. In this way, after the vibration damping hood 2231 is assembled on the top face of the fan and then the fan bin, the trumpet-shaped protruding edge 22313, namely, the top face sealing vibration damping member 22313, can just be supported around the air inlet of the fan bin, such that the influence of the vibration and noise is reduced while sealing the air inlet. In some embodiments, the vibration damping hood top face 22311 further includes at least one projection extending continuously around the circumference of the first opening 22312, and the at least one projection is configured to reduce the vibration of the fan 2220 after the projection is abutted against the inner wall of the top face of the fan bin 2200. In some embodiments, the vibration damping device top face 22311 further includes a first projection 22314, a second projection 22315 and a third projection 22316 that continuously extend around the circumference of the first opening 22312. A recess 22317 that continuously extends around the circumference of the first opening 22312 is formed between the second projection 22315 and the third projection 22316. The first projection 22314, the second projection 22315, the third projection 22316 and the recess 22317 are deformable by pressing in the assembling process, thereby reducing the hard connection between the fan and the fan bin, and further reducing the vibration damage. In some embodiments, a plurality of discontinuous hollow chambers may be included in the third projection 22316 to further reduce the vibration of the fan.

In some embodiments, as shown in FIG. 8, the vibration damping hood includes a vibration damping hood side wall 22318 which extends downwardly along the vibration damping hood top face 22311. When the vibration damping hood 2231 covers the top face of the fan, the vibration damping hood side wall 22318 wraps the side face of the fan. The vibration damping hood side wall 22318 includes a plurality of spaced first raised beams 22319. The first raised beam 22319 is of a hollow structure. The outer wall of each first raised beam 22319 is abutted against the side wall of fan bin 2200 to further reduce the vibration of the fan during working.

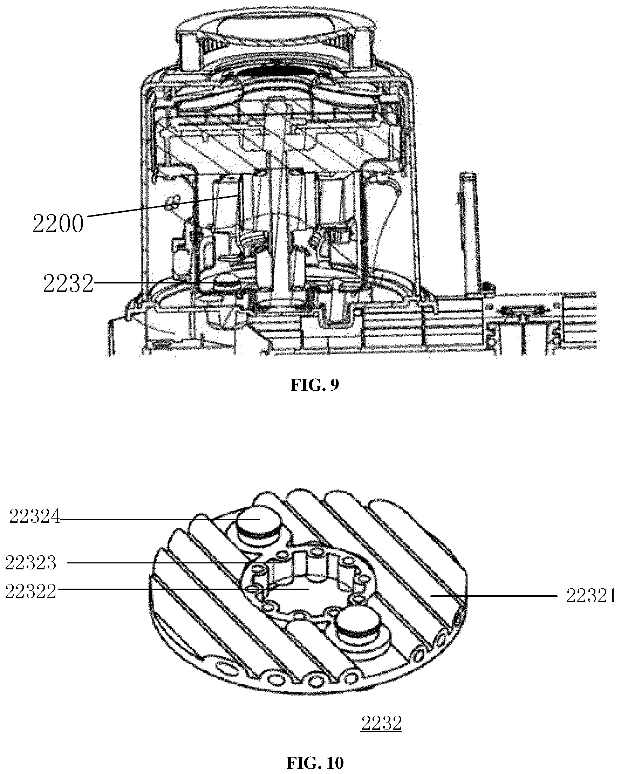

In some embodiments, as shown in FIG. 9, the vibration damping device 2230 further includes a vibration damping pad 2231 which is assembled to at least part of the bottom end of the fan 2200 to reduce the vibration of the fan 2220. In some embodiments, as shown in FIG. 10, the vibration damping pad 2232 includes a second opening 22322 matching the bottom end of the fan and a plurality of second raised beams 22321 extending transversely along the upper surface of the vibration damping pad 2232. The second raised beam 2221 is of a hollow structure, and the side wall 231 of each second raised beam 2231 is in contact with the bottom of the fan 2200 to further reduce the vibration of the fan. After the vibration damping pad 2232 is assembled at the bottom end of the fan 2200, a wind outlet structure at the bottom end of the fan extends into the second opening 22322. The bottom end of the fan is in interference clamping with an assembly projection 22324 of the vibration damping pad 2232. A plane of the bottom end of the fan is in contact with a plurality of second raised beams 22321 extending transversely along the upper surface of the vibration damping pad 2232, and the hollow second raised beams 22321 play a role in reducing vibration. In some embodiments, the vibration damping pad 2232 further includes a plurality of third raised beams 22323 longitudinally extending along the inner side wall of the second opening 22322. After extending into the second opening 22322, a wind outlet structure at the bottom end of the fan is in close contact with the plurality of third raised beams 22323. The third raised beam 22323 is of a hollow structure, further reducing the vibration of the fan.

According to the self-cleaning dust collection holder according to the present embodiment, the self-cleaning dust collection holder body includes the fan provided in the fan bin and the vibration damping devices assembled on the at least part of the outer surface of the fan, and the plurality of vibration damping structures is provided on the vibration damping devices, such that the adverse influence of the vibration of the fan on the self-cleaning dust collection holder can be reduced.

In the related art, a cleaning module (such as a mop cloth bracket of a wet cleaning module) on the bottom face of automatic cleaning equipment is usually of a lifting and dropping structure and does not cling to the bottom of the automatic cleaning equipment in a natural state of gravity. Moreover, if a dust collection port of the automatic cleaning equipment is located at the front of a washing tank, the cleaning module on the bottom face of the automatic cleaning equipment will pass through the dust collection port when it climbs on or leaves a pile. When passing through the dust collection port, the cleaning module (especially the mop cloth bracket) is highly likely to be stuck by the dust collection port. As a result, it is impossible for the automatic cleaning equipment to climb on or leave the pile smoothly. Especially, when the automatic cleaning equipment climbs on the pile, since a driving force of climbing on the pile in the rear is usually not large, it is more likely to lead to failure of smooth climbing on the pile. In addition, when the cleaning module is the wet cleaning module, a mop cloth that has just been washed is not completely dry, so if it rubs against the dust collecting port, water on the mop cloth will be squeezed into the dust collecting port, and then sucked into a dust collection box, causing damage to the fan.

Therefore, a self-cleaning dust collection holder is provided according to an embodiment of the present disclosure, in which by disposing a lifting structure on a bottom plate body, the cleaning module is protected from being rubbed and completely stuck in the process that the automatic cleaning equipment climbs on and leaves the pile, and thus, a success rate of climbing on and leaving the pile by the automatic cleaning equipment can be increased. The same structure has the same technical effect, and part of the technical effect is not repeated herein.

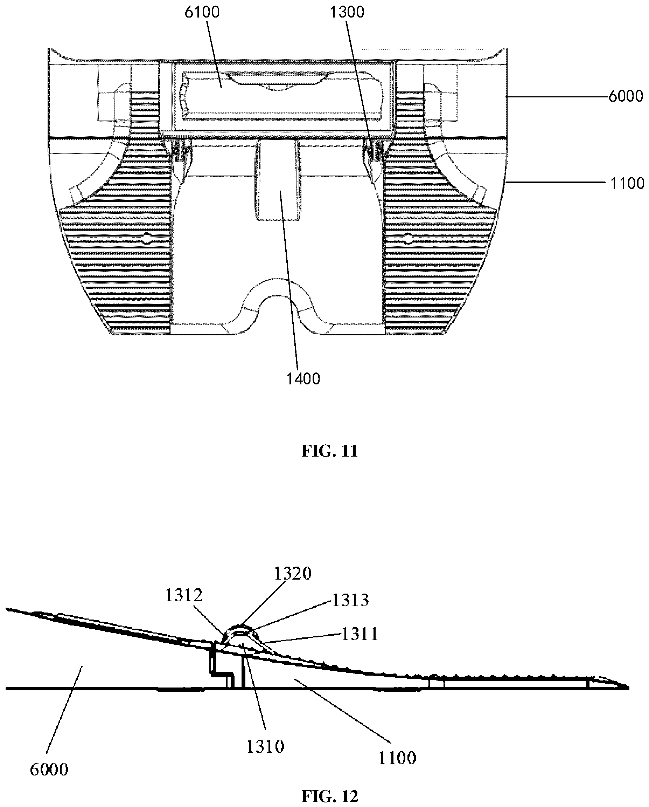

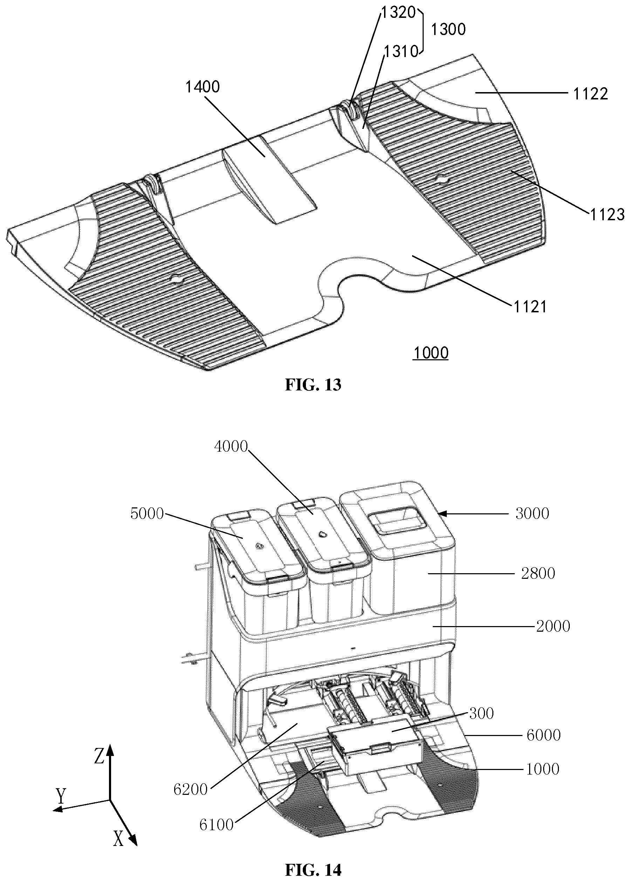

Specifically, for the self-cleaning dust collection holder provided by the embodiments of the present disclosure, for example, FIGs. 11 and 12 exemplarily show schematic diagrams of a bottom plate of the self-cleaning dust collection holder connected to a body base from different angles, and FIG. 13 exemplarily shows a schematic structure diagram of a bottom plate of the self-cleaning dust collection holder.

As shown in FIG. 1, the self-cleaning dust collection holder provided by the present embodiment includes a bottom plate 1000 of the self-cleaning dust collection holder and a self-cleaning dust collection holder body 2000.

The self-cleaning dust collection holder body 2000 is configured to collect garbage in a dust box of automatic cleaning equipment. In some embodiments, the self-cleaning dust collection holder body 2000 may be further provided with a dust collection bin 3000, a clean water tank 4000, a sewage tank 5000 and other components. A body base 6000 is integrally provided below the self-cleaning dust collection holder body 2000. In some embodiments, the bottom plate 1000 of the self-cleaning dust collection holder is detachably or non-detachably connected to the body base 6000 to facilitate transportation.

In some embodiments, the body base 6000 below the self-cleaning dust collection holder body 2000 includes a washing tank 6200. The washing tank 6200 is configured to supplement a cleaning liquid to a wet cleaning module of the automatic cleaning equipment, and/or contain debris removed from the wet cleaning module, and/or collect sewage generated in a process of cleaning the wet cleaning module, thereby facilitating the subsequent treatment of the debris and the sewage. In some embodiments, the washing tank 6200 is provided behind the dust collection port 6100.

As shown in FIG. 11, the bottom plate 1000 of the self-cleaning dust collection holder includes a bottom plate body 1100 and lifting structures 1300.

The bottom plate body 1100 is configured to support the automatic cleaning equipment when it returns to the bottom plate 1000 of the self-cleaning dust collection holder. In other words, the automatic cleaning equipment can move onto the bottom plate 1000 of the self-cleaning dust collection holder and is supported by the bottom plate body 1100. Specifically, in a process that the automatic cleaning equipment moves onto the bottom plate 1000 of the self-cleaning dust collection holder, driving wheels of the automatic cleaning equipment run on an inclined plane of the bottom plate body 1100.

Referring to FIGs. 11 and 12 together, the body base 6000 and the bottom plate body 1100 are sequentially provided along a first direction X, and the bottom plate 1000 and the body base 6000 are connected to each other. Specifically, along the first direction X, the body base 6000 includes a start end and a stop end, and the bottom plate body 1100 also includes a start end and a stop end. The stop end of the body base 6000 and the start end of the bottom plate body 1100 are abutted against each other. In some embodiments, the body base 6000 and the bottom plate body 1100 are detachably or non-detachably connected to facilitate transportation.

The body base 6000 and the bottom plate body 1100 at least form a continuous inclined plane along the first direction X, such that the driving wheels of the automatic cleaning equipment can run on the inclined plane relatively smoothly. In some embodiments, the driving wheels of the automatic cleaning equipment are located on two sides of its bottom; and accordingly, the body base 6000 and the bottom plate body 1100 form the continuous inclined plane cooperating with the positions of the driving wheels for the driving wheels to run on the inclined plane. In some embodiments, the bottom plate body 1100 further includes a recessed portion 1121 and raised portions 1122. The recessed portion 1121 is located in the center of the bottom plate body 1100, and the raised portions 1122 are located on the two sides of the recessed portion. An angle between the upper surface of the recessed portion 1121 and the horizontal plane is smaller than that between the upper surface of the raised portion 1122 and the horizontal plane.

In some embodiments, the angle between the upper surface of the recessed portion 1121 and the horizontal plane may be close to zero. The start end of each raised portion 1122 and the stop end of the body base 6000 are abutted against each other and have the same height, such that the raised portions 1122 and the body base 6000 form two continuous inclined planes cooperating with the driving wheels. By disposing the recessed portion 1121 in the middle of the bottom plate body 1100, the automatic cleaning equipment in the process of the climbing on or leaving the pile can be protected from being blocked or rubbed by the surface of the bottom plate body 1100.

Further, the raised portion 1122 of the bottom plate body 1100 is provided with an anti-skid structure 1123 along the first direction X, and the anti-skid structure 1123 is at least provided across the start end and the stop end of the bottom plate body 1100 along the first direction. The anti-skid structure 1123 may be a raised strip or recess of any shape, and for example, may be a strip-shaped projection extending along a second direction Y perpendicular to the first direction X. Disposing the anti-skid structure 1123 on the raised portion 1122 can further help the automatic cleaning equipment smoothly climb on and leave the pile.

In some embodiments, the body base 6000 includes an upper surface referred to as a first upper surface. When the body base 6000 is placed on a horizontal ground, a predetermined inclination angle exists between the upper surface of the body base 6000 and the horizontal plane, a slope factor corresponding to the predetermined inclination angle is referred to as a first slope factor. Similarly, the bottom plate body 1100 includes an upper surface referred to as a second upper surface. When the bottom plate body 1100 is placed on the horizontal ground, a predetermined inclination angle exists between the upper surface of the bottom plate body 1100 and the horizontal plane, and a slope factor corresponding to the predetermined inclination angle is referred to as a second slope factor. In some embodiments, the bottom plate body 1100 includes a recessed portion 1121 and a raised portion 1122, and the second slope factor is the slope factor of the upper surface of the raised portion 1122 relative to the horizontal plane. In some embodiments, the following relationship may exist between the first slope factor and the second slope factor: the first slope factor is greater than the second slope factor. As power of the automatic cleaning equipment when it is just climbing on the pile is relatively small, setting the smaller second slope factor is beneficial to the climbing on the pile by the automatic cleaning equipment.

As shown in FIG. 13, the dust collection port 6100 is configured to be butted with a dust outlet of the automatic cleaning equipment. The garbage in the dust box of the automatic cleaning equipment enters the dust collection bin of the self-cleaning dust collection holder body 2000 through the dust collection port 6100. In some embodiments, the dust collection port 6100 is further surrounded by a sealing rubber pad; and the sealing rubber pad is configured to seal the dust collection port 6100 after it is butted with the dust outlet of the automatic cleaning equipment, so as to prevent the garbage from being leaked. The dust collection port 6100 is located on the upper surface of the body base 6000, and approximately at the edge of a connection between the body base 6000 and the bottom plate body 1100.

Referring to FIGs. 11 and 12 together, the lifting structures 1300 are provided on the upper surface of the bottom plate body 1100, and approximately at the edges of connections between the bottom plate body 1100 and the base plate 6000. In some embodiments, the lifting structures 1300 are provided in the recessed portion 1121 of the bottom plate body 1100. The lifting structure 1300 is configured to squeeze the cleaning module on the bottom surface of the automatic cleaning equipment to enable the cleaning module to move towards the interior of the automatic cleaning equipment, for example, press the cleaning module on the bottom surface of the automatic cleaning equipment into the automatic cleaning equipment, when the automatic cleaning equipment moves backward (in this case, the front side of the automatic cleaning equipment body faces the outer side of the self-cleaning dust collection holder body 2000, namely, the first direction X) onto the bottom plate 1000 of the self-cleaning dust collection holder.

In the process that the automatic cleaning equipment moves backward along the first direction X onto the bottom plate 1000 of the self-cleaning dust collection holder to enable a dust outlet of the automatic cleaning equipment to be butted with the dust collection port 6100 of the body base 6000, if the upper surface of the bottom plate body 1100 is not provided with the lifting structure 1300, the cleaning module (e.g., the mop cloth bracket of the wet cleaning module) of the automatic cleaning equipment may be stuck by the dust collection port 6100 when passing through the dust collection port 6100, casing failure of smooth climbing on and leaving the pile by the automatic cleaning equipment 100.

Since the lifting structures 1300 are provided on the upper surface of the bottom plate body 1100, in the process that the automatic cleaning equipment moves backward along the first direction X onto the bottom plate 1000 of the self-cleaning dust collection holder to enable the cleaning module of the automatic cleaning equipment to be butted with the washing tank in the self-cleaning dust collection holder body 2000, first, the lifting structures 1300 can be abutted against at least part of a frame of the cleaning module, and thus, the cleaning module is lifted by a certain height (for example, 8 mm). In this case, the cleaning module is squeezed by the lifting structures 1300, such that the cleaning module moves toward the interior of the automatic cleaning equipment (for example, it is pressed into the automatic cleaning equipment by the lifting structures 1300). Then, as the automatic cleaning equipment continues to travel backward along the first direction X, the frame of the cleaning module is passing above the dust collection port 6100 and gradually disengaging from the lifting structures 1300. In this process, even if the cleaning module is completely disengaged from the lifting structures 1300, the cleaning module can still pass gently against the dust collection port 6100 because it is already partially or completely located above the dust collection port 6100. After completely passing through the dust collection port 6100, the cleaning module gradually returns to a state before being squeezed by the lifting structures 1300 under the action of gravity, that is, at least part of the cleaning module of the automatic cleaning equipment protrudes in a direction distal from the automatic cleaning equipment. In this way, the cleaning module falls back to a certain height (for example, 8 mm) under the action of gravity, such that the cleaning module can be butted with the washing tank.

By disposing the lifting structures on the upper surface of the bottom plate body 1100, the cleaning module is protected from being blocked by the dust collection port 6100 in the process that the automatic cleaning equipment climbs on and leaves the pile, such that a success rate of climbing on and leaving the pile by the automatic cleaning equipment is increased.

In some embodiments, the lifting structure 1300 includes a wedge-shaped member 1310 and a roller 1320.

The wedge-shaped member 1310 is provided on an upper surface of the bottom plate body 1100, and protrudes from the upper surface of the bottom plate body 1100 towards a direction distal from the upper surface. The wedge-shaped member 1310 sequentially includes a first inclined plane 1311, a first top face 1313 and a second inclined plane 1312 along the first direction X; and the first inclined plane 1311, the first top face 1313 and the second inclined plane 1312 are sequentially abutted with each other in the first direction X.

An acute angle between the first inclined plane 1311 and the upper surface of the bottom plate body 1100 where the first inclined plane 1311 is located is a first angle α, and an acute angle between the second inclined plane 1312 and the upper surface of the bottom plate body 1100 where the second inclined plane 1312 is located is a second angle β. In some embodiments, the first included angle α is smaller than the second included angle β, such that when the automatic cleaning equipment moves backward onto the bottom plate body 1100 along the first direction X, the automatic cleaning equipment can be gently squeezed and quickly fall back. Specifically, in some embodiments, the range of the first included angle α may be 5° to 25°, such as 10° to 15°, so as to ensure that the cleaning module on the bottom surface of the automatic cleaning equipment is smoothly squeezed by the lifting structures 1300 when the automatic cleaning equipment moves backward onto the bottom plate body 1100 along the first direction X. In some embodiments, the range of the second included angle β may be 75° to 90°, such as 80° to 85°, such that after being disengaged from the lifting structures 1300, the frame of the cleaning module can quickly fall back under the action of gravity.

It can be understood that if the wedge-shaped member 1310 is provided in the recessed portion 1121 of the bottom plate body 1100, the first angle α is an angle between the first inclined plane 1311 and the upper surface of the recessed portion 1121, and the second angle β is an angle between the second inclined plane 1312 and the upper surface of the recessed portion 1121. If the wedge-shaped member 1310 is provided on the raised portion 1122 of the bottom plate body 1100, the first angle α is an angle between the first inclined plane 1311 and the upper surface of the raised portion 1122, and the second angle β is an angle between the second inclined plane 1312 and the upper surface of the raised portion 1122.

The roller 1320 is provided on the first top face 1313, and is configured to be in rolling contact with the cleaning module on the bottom face of the automatic cleaning equipment during squeezing the cleaning module to cause the cleaning module to move toward the interior of the automatic cleaning equipment. By disposing the roller 1320, a frictional resistance between the frame of the cleaning module and the wedge-shaped member 1310 can be reduced, and wear between the components is reduced, thereby prolonging the service life of each component.

In some embodiments, a part of the roller 1320 is embedded in the wedge-shaped member 1310, such that smooth transition from the sliding contact to the rolling contact between the lifting structure 1300 and the frame of the cleaning module can be achieved. In some embodiments, the roller 1320 is detachably connected to the wedge-shaped member 1310 to facilitate the replacement of the roller 1320.

In some embodiments, there are at least two lifting structures 1300 which are oppositely provided in the second direction Y perpendicular to the first direction X. During the backward movement of the automatic cleaning equipment onto the bottom plate body 1100 along the first direction X, the at least two lifting structures 1300 are abutted against the frame of the cleaning module, respectively, such that the cleaning module can be evenly lifted by a certain height. By disposing two or more lifting structures 1300, force borne by the cleaning module can be more dispersed, and the deflection of the cleaning module in the second direction Y caused by uneven borne force can be avoided.

In some embodiments, there are two lifting structures 1300 which are oppositely provided in the second direction Y and are substantially provided symmetrically with respect to the central axis of the bottom plate body 1100. The distance between the two lifting structures 1300 is equal to or slightly larger than the width of the dust collection port 6100 in the second direction Y, avoiding blocking of a main brush hood at the lower part of the automatic cleaning equipment.

In some embodiments, the bottom plate 1000 of the self-cleaning dust collection holder further includes an inclined plane body 1400. The inclined plane body 1400 may be a slope and is provided on the surface of the bottom plate body 1100. Specifically, the inclined plane body 1400 may be provided at the edge of a connection between the bottom plate body 1100 and the body base 6000, and is approximately provided at a position in the front of the dust collection port 6100 and on a central axis of the bottom plate body 1100. In some embodiments, there are two lifting structures 1300 which are provided oppositely in the second direction Y, and the inclined plane body 1400 is located approximately at the middle of the two lifting structures 1300. By disposing the inclined plane body 1400 on the surface of the bottom plate body 1100, the front end of the automatic cleaning equipment (especially a bumping sensor provided at the front end) can be prevented from touching the edge of the dust collection port 6100 when the automatic cleaning equipment moves forward to climb on the pile.

In some embodiments, the inclined plane body 1400 is provided in the recessed portion 1121 of the bottom plate body 1100. In some embodiments, as shown in FIG. 13, both the inclined plane body 1400 and the lifting structure 1300 are provided in the recessed portion 1121 of the bottom plate body 1100. By disposing the recessed portion 1121 in the middle of the bottom plate body 1100, and disposing the inclined plane body 1400 and the lifting structure 1300 in the recessed portion 1121, the automatic cleaning equipment during climbing on and leaving the pile can be protected from being blocked by or rubbing against the surface of the bottom plate body 1100.

In some embodiments, the lifting structure 1300 is provided in the recessed portion 1121 of the bottom plate body 1100 and is higher than the raised portion 1122, such that the cleaning module on the bottom face of the automatic cleaning equipment can be effectively squeezed, enabling the cleaning module to move by a longer distance towards the interior of the automatic cleaning equipment.

In some embodiments, the inclined plane body 1400 is provided in the recessed portion 1121 of the bottom plate body 1100, and is approximately flush with the raised portion 1122. A too low inclined plane body 1400 cannot prevent the automatic cleaning equipment during climbing on the pile from touching the edge of the dust collection port 6100, while a too high inclined plane body 1400 will block the automatic cleaning equipment during climbing on or leaving the pile.

In some embodiments, the lifting structure 1300 has a preset distance from the stop end of the bottom plate body 1100. With this preset distance, when the automatic cleaning equipment 1300 moves backward to enter the bottom plate 1000 of the self-cleaning dust collection holder, the lifting structure 1300 is not in contact with the cleaning module before the driving wheels of the automatic cleaning equipment enter the stop end of that bottom plate body 1100. The reason for this is that backward force of the automatic cleaning equipment is relatively small before the driving wheels of the automatic cleaning equipment are in contact with the anti-skid structure 1123 at the start end, and if the lifting structure 1300 is in contact with the cleaning module (such as the mop cloth bracket) at this time, it will hinder the automatic cleaning equipment from climbing on the pile, which, in turn, may lead to the failure of climbing on the pile. Accordingly, when the driving wheels of the automatic cleaning equipment enter the stop end of the bottom plate body 1100, the lifting structure 1300 may be abutted against the top of the cleaning module, at this time the automatic cleaning equipment has stepped on the anti-skid structure 1123, and the automatic cleaning equipment can climb on and leave the pile smoothly with the help of the anti-skid structure 1123.

A dust collection system is further provided according to an embodiment of the present disclosure, and includes: automatic cleaning equipment and the self-cleaning dust collection holder according to any one of the above embodiments.

In the self-cleaning dust collection holder and the dust collection system provided according to the embodiments of the present disclosure, the lifting structure is provided on the bottom plate body, such that the cleaning module is protected from being rubbed and completely stuck in the process that the automatic cleaning equipment climbs on and leaves the pile, and thus, the success rate of climbing on and leaving the pile by the automatic cleaning equipment can be increased.

In related art, the structure of a wind duct of a self-cleaning dust collection holder is commonly relatively complex, and occupies more physical space, such that the self-cleaning dust collection holder seems to be bulky. Moreover, the complex wind duct structure also reduces the dust collection effect to a certain extent, such that it is difficult to suck all garbage in a dust box into a dust collection chamber of the self-cleaning dust collection holder.

Therefore, a self-cleaning dust collection holder is provided according to an embodiment of the present disclosure, in which by optimizing a wind duct structure inside the self-cleaning dust collection holder and reducing a wind duct path, a wind duct of the self-cleaning dust collection holder is smoother and more compact in structure, thereby improving the dust collection efficiency of automatic cleaning equipment.

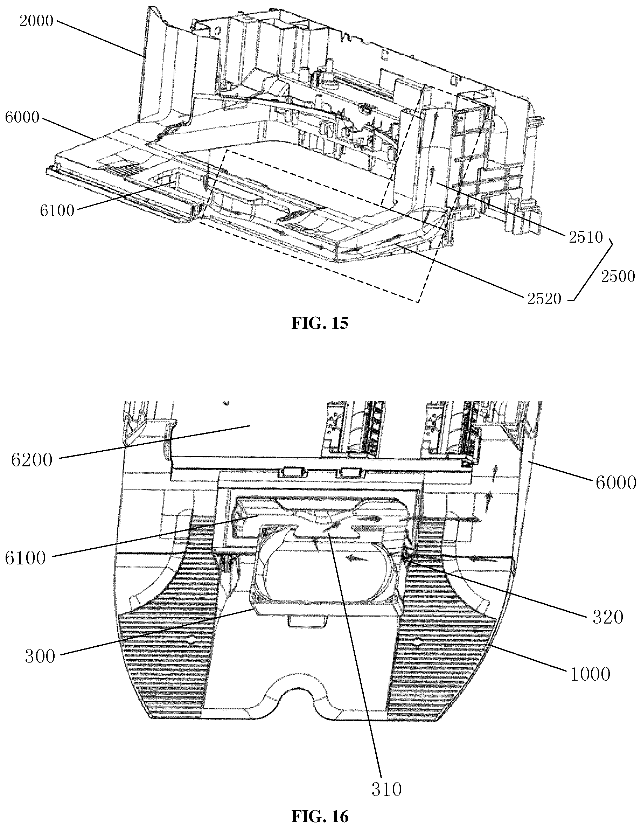

Specifically, for the self-cleaning dust collection holder provided by the embodiments of the present disclosure, for example, FIG. 14 exemplarily shows a schematic diagram of an overall structure of a self-cleaning dust collection holder in combination with a dust box, and FIGs. 15 and 16 specifically show a wind duct structure of the self-cleaning dust collection holder and a direction of an airflow in the wind duct in a dust collection state.

As shown in FIG. 14, the self-cleaning dust collection holder provided by the present embodiment includes a bottom plate 1000 of the self-cleaning dust collection holder and a self-cleaning dust collection holder body 2000. The bottom plate 1000 of the self-cleaning dust collection holder and the self-cleaning dust collection holder body 2000 are detachably or non-detachably connected. Specifically, the bottom plate 1000 of the self-cleaning dust collection holder is detachably or non-detachably connected to a body base 6000 below the self-cleaning dust collection holder body 2000. The detachable connection mode can facilitate transportation and maintenance.

The self-cleaning dust collection holder body 2000 is configured to collect the garbage from the dust box of automatic cleaning equipment. In some embodiments, the self-cleaning dust collection holder body 2000 may be further provided with a dust collection bin 3000, a clean water tank 4000, a sewage tank 5000 and other components which are provided side by side. Specifically, as shown in FIG. 2, the self-cleaning dust collection holder body 2000 includes a water storage chamber 2700 and a dust collection chamber 2100. The water storage chamber 2700 with an upward and forward opening is provided at the top of the self-cleaning dust collection holder body 2000, and may further include a clean water bin for accommodating the clean water tank 4000 and a sewage bin for accommodating the sewage tank 5000. The dust collection chamber 2100 with an upward and forward opening is provided at the top end of the self-cleaning dust collection holder body 2000 and side by side with the water storage chamber 2700, and forms the dust collection bin 3000 for accommodating a dust collection hood 2800. The upward and forward design of both the water storage chamber 2700 and the dust collection chamber 2100 facilitates the mounting and removal of the sewage tank 5000, the clean water tank 4000 and the dust collection hood 2800.

The body base 6000 is provided below the self-cleaning dust collection holder body 2000. In some embodiments, the body base 6000 is integrally provided below the self-cleaning dust collection holder body 2000. The body base 6000 is abutted against the bottom plate 1000 of the self-cleaning dust collection holder. Specifically, the bottom plate 1000 of the self-cleaning dust collection holder and the body base 6000 are sequentially provided along the second direction opposite to a direction of an arrow of the front-rear axis X.

As shown in FIG. 14, a dust collection port 6100 is provided on the body base 6000, and is substantially located at the edge of a connection between the body base 6000 and the bottom plate 1000 of the self-cleaning dust collection holder. The dust collection port 6100 is configured to be butted with a dust outlet of the automatic cleaning equipment. The garbage in the dust box 300 of the automatic cleaning equipment enters the dust collection chamber 2100 of the self-cleaning dust collection holder body 2000 through the dust collection port 6100. In some embodiments, the dust collection port 6100 is further surrounded by a sealing rubber pad; and the sealing rubber pad is configured to seal the dust collection port 6100 after it is butted with the dust outlet of the automatic cleaning equipment, so as to prevent the garbage from being leaked. The dust collection port 6100 extends generally in a first direction opposite to a direction of an arrow of the transversal axis Y, and the first direction is generally perpendicular to the second direction. The first direction is also a length direction of the dust collection port 6100, and the distance that the dust collection port 6100 extends in the first direction may be recorded as length L₁. The dust collection port 6100 extends along the second direction while extending along the first direction. The second direction is a width direction of the dust collection port 6100. The distance that the dust collection port 6100 extends in the second direction may be recorded as width W₁. It can be understood that a relationship between length L₁ and width W₁ is as follows: L₁> W₁.

In some embodiments, the body base 6000 further includes a washing tank 6200. The washing tank 6200 is configured to clean a cleaning component on the automatic cleaning equipment, for example, supplement a cleaning liquid to a wet cleaning module of the automatic cleaning equipment, and/or contain debris removed from the wet cleaning module, and/or collect sewage generated in a process of cleaning the wet cleaning module, thereby facilitating the subsequent treatment of the debris and the sewage. In some embodiments, the washing tank 6200 is provided behind the dust collection port 6100. The washing tank 6200 extends in the second direction to a position below the self-cleaning dust collection holder body 2000, and a side wall may be formed between the self-cleaning dust collection holder body 2000 and the washing tank 6200.

Referring to FIGs. 15 and 16 together, the self-cleaning dust collection holder body 2000 further includes a wind duct 2500, one end of which is connected with the dust collection port 6100 of the body base 6000, and the other end of which is connected with the dust collection chamber 2100. When the self-cleaning dust collection holder is in the dust collection state, sufficient negative pressure is formed in the dust collection bin 3000, such that the garbage in the dust box 300 is sucked into a dust collection bag through the dust collection port 6100 and the wind duct 2500. The wind duct 2500 may be further divided into a body wind duct 2510 and a base wind duct 2520 according to different positions thereof. The base wind duct 2520 is generally located at the position shown by a dashed box at the lower right corner of FIG. 15, and the body wind duct 2510 is generally located at the position shown by a dashed box at the upper right corner of FIG. 15. In FIGs. 15 and 16, solid arrows also show a movement trajectory of garbage driven by the airflow in the base wind duct 2520 and the body wind duct 2510.

Specifically, the base wind duct 2520 is located inside the body base 6000, and has a substantially L-shaped structure. One end of the base wind duct 2520 is connected with the dust collection port 6100 in its length direction, and the other end of the base wind duct 2520 is connected with the body wind duct 2510 located on the side wall of the self-cleaning dust collection holder body 2000. Specifically, the base wind duct 2520 is connected with the dust collection port 6100 in its length direction, extends to an approximate edge of the body base 6000 along the first direction, and then extends to the body wind duct 2510 along the second direction. In some embodiments, one end, in the length direction of the dust collection port 6100, of the base wind duct 2520 is connected with the dust collection port 6100, such that the airflow and the garbage driven by the airflow directly flow out from one end in the length direction of the dust collection port 6100 and then move along a nearly straight line, thus reducing resistance to the airflow out of the dust collection port 6100. In some embodiments, the position where the base wind duct 2520 extends along the second direction is located between the edge of the washing tank 6200 and the edge of the body base 6000, such that limited space of the body base 6000 is fully used, and an overall size of a product is reduced. In some embodiments, the width of the base wind duct 2520 is slightly smaller than that of the dust collection port 6100, and the width of the wind duct may be the maximum of a cross section of the wind duct. For example, when the cross section of the wind duct is circular or nearly circular, the width of the wind duct is the diameter of a circle or the length of the major axis of an ellipse. By appropriately reducing the width of the base wind duct 2520, a flow rate of the airflow in the base wind duct 2520 can be increased, such that the garbage in the dust box 300 can easily pass through the base wind duct 2520, and the base wind duct 2520 is prevented from being blocked, thereby improving the dust collection effect. In some embodiments, a bend at which the extension of the base wind duct 2520 along the first direction is switched to the extension of the base wind duct 2520 along the second direction is an arc-shaped smooth connection. Although the first direction and the second direction are nearly perpendicular to each other, the base wind duct 2520 does not turn at a right angle at the bend between the first direction and the second direction, but instead, an original right angle is replaced by a section of arc tangent to two sides of the angle, such that the airflow passing through the base wind duct 2520 is more gentle and the flow rate does not change abruptly. Similarly, a bend at which the base wind duct 2520 extends along the second direction and the body wind duct 2510 extends upwardly may also be an arc-shaped smooth connection.

The body wind duct 2510 is at least provided on the side wall of the self-cleaning dust collection holder body 2000. One end of the body wind duct 2510 is connected with the base wind duct 2520, and the other end of the body wind duct 2510 leads to the dust collection chamber 2100. The body wind duct 2510 communicates the base wind duct 2520 with the dust collection chamber 2100. Specifically, the body wind duct 2510 extends upwardly along the side wall of the self-cleaning dust collection holder body 2000 to the dust collection bin 3000. The side wall for the body wind duct 2510 to extend may be formed by the side edge of the washing tank 6200 and the side edge of the self-cleaning dust collection holder body 2000 together. The above design of the body wind duct 2510 can fully use vacant space between the self-cleaning dust collection holder body 2000 and the washing tank 6200, enabling the structure to be more compact. In some embodiments, the width of the body wind duct 2510 is larger than that of the base wind duct 2520. By properly adjusting a width relationship between the body wind duct 2510 and the base wind duct 2520, the flow rate of the airflow in the base wind duct 2520 can be increased, such that the garbage in the dust box 300 can pass through the base wind duct 2520 more easily, and the base wind duct 2520 can be protected from being blocked, thereby improving the dust collection effect.

In some embodiments, the body wind duct 2510 and the base wind duct 2520 are of two independent structures which are connected at a connector. The separate structures can facilitate the maintenance of a pipeline, especially when the pipeline is blocked. In some embodiments, the body wind duct 2510 and the base wind duct 2520 are integrated, and the integrated structure can effectively avoid the leakage of the airflow in the wind duct.

A self-cleaning dust collection holder is further provided according to the present disclosure, and include a dust collection chamber 2100 provided at the top end of the self-cleaning dust collection holder; a body wind duct at least partially provided on the side wall of the self-cleaning dust collection holder; a washing tank 6200 provided below the self-cleaning dust collection holder and configured to clean a cleaning component on the automatic cleaning equipment; a dust collection port 6100 configured to collect dust after being butted with a dust outlet of the automatic cleaning equipment; a base wind duct connected with the dust collection port 6100 and extending along an outer edge direction of the washing tank 6200 to be connected with the body wind duct. The dust collection port 6100 is connected with a dust collection chamber 2100 through the base wind duct and the body wind duct. With this wind duct layout, the effective space at the bottom of the self-cleaning dust collection holder can be effectively utilized; and since a dust collection path is directly connected to the dust collection chamber from the dust collection port, the path is simple and the dust collection efficiency is high.

A dust collection system is further provided according to an embodiment of the present disclosure, and includes: automatic cleaning equipment and the self-cleaning dust collection holder according to the above embodiment.

Referring to FIGs. 14 and 16 together, a dust box 300 included in the automatic cleaning apparatus is shown. The dust box 300 includes a dust inlet 310 and a wind inlet 320. The wind inlet 320 is provided on a side wall of the dust box 300 that faces a first extension direction of the base wind duct 2520; and the dust inlet 310 is provided on a side wall of the dust box 300 that faces the self-cleaning dust collection holder body 2000. The dust inlet 310 is butted with a dust outlet of the automatic cleaning equipment.

In the dust collection state, the wind inlet 320 of the dust box 300 is opened, and a first fan located in the self-cleaning dust collection holder starts to work to suck air in the dust collection chamber 2100 and the wind duct 2500 out, such that air pressure in the dust collection chamber 2100 and the wind duct 2500 is reduced, allowing air to flow along a U-shaped channel formed among the wind inlet 320 and the dust inlet 310 of the dust box 300, the dust outlet of the automatic cleaning equipment, the dust collection port 6100 of the self-cleaning dust collection holder and the wind cut 2500. Thus, the airflow lifts the garbage in the dust box 300; and the garbage from the dust box 300 that is driven by the airflow is finally sucked into the dust collection chamber 2100. The U-shaped channel is the best inflow and outflow channel for the airflow. Through the design of the U-shaped channel, the air flows more smoothly, such that it is easier to bring the garbage in the dust box out of the dust box and enable the garbage to enter the dust collection bin through the wind duct.

According to the self-cleaning dust collection holder and the dust collection system provided by the embodiments of the present disclosure, the wind duct structure inside the self-cleaning dust collection holder is optimized and the wind duct path is reduced, such that the wind duct of the self-cleaning dust collection holder is smoother and more compact in structure, thereby improving the dust collection efficiency of the automatic cleaning equipment. By disposing the wind duct along the outer edge of the washing tank, the design complexity and the path length of the wind duct are reduced while the limited space of the self-cleaning dust collection holder is fully used, thereby further enhancing the dust collection efficiency.

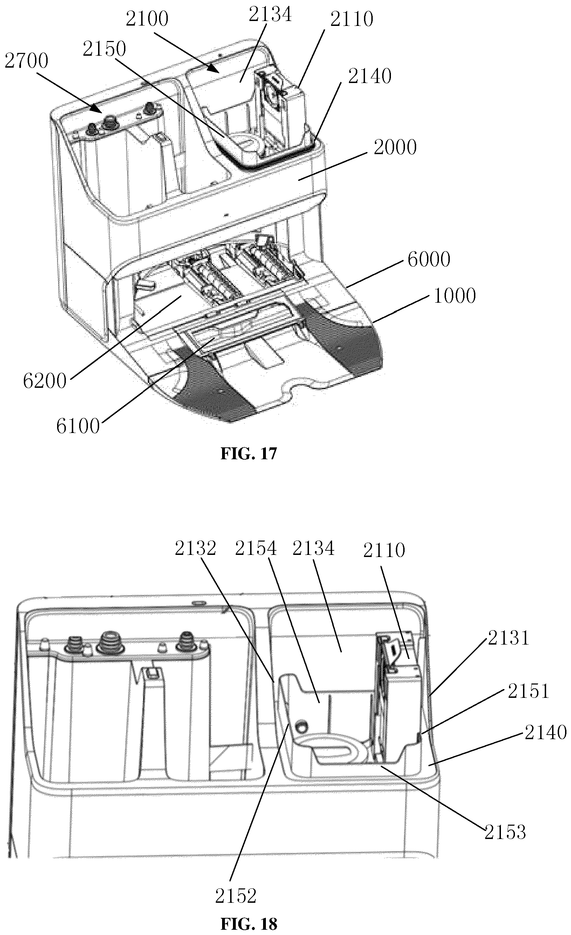

In the related art, since a dust box of automatic cleaning equipment has a limited capacity, a user often needs to bend down to clean the dust box, resulting in poor user experience. Therefore, a self-cleaning dust collection holder is provided according to an embodiment of the present disclosure. According to the self-cleaning dust collection holder, garbage in a dust box of automatic cleaning equipment is centralizedly collected into a dust collection bin of the self-cleaning dust collection holder through a dust collection system, such that the number of garbage disposal times for the user can be reduced, improving the user experience. Specifically, for the self-cleaning dust collection holder provided by the embodiment of the present disclosure, for example, FIG. 14 exemplarily shows a schematic diagram of an overall structure of a self-cleaning dust collection holder, and FIG. 17 exemplarily shows a schematic structure diagram of a self-cleaning dust collection holder body according to the present disclosure without a sewage tank, a clean water tank or a dust collection hood.

As shown in FIG. 14, a direction in which a bottom plate 1000 of the self-cleaning dust collection holder protrudes from the self-cleaning dust collection holder body 2000 is a forward direction, and a direction in which the bottom plate 1000 of the self-cleaning dust collection holder faces a rear wall of the self-cleaning dust collection holder body 2000 is a backward direction. A dust collection bin 3000 is located on the left side of the self-cleaning dust collection holder, a clean water tank 4000 is located on the right side of the dust collection bin 3000, and a sewage tank 5000 is located on the right side of the clean water tank 4000.

The self-cleaning dust collection holder body 2000 is configured to collect garbage from a dust box of automatic cleaning equipment. In some embodiments, the self-cleaning dust collection holder body 2000 may be further provided with the dust collection bin 3000, the clean water tank 4000, the sewage tank 5000 and other components which are provided side by side.

As shown in FIG. 17, the self-cleaning dust collection holder body 2000 includes a water storage chamber 2700 and a dust collection chamber 2100. The water storage chamber 2700 with an upward and forward opening is provided at the top of the self-cleaning dust collection holder body 2000, and may further include a clean water bin for accommodating the clean water tank 4000 and a sewage bin for accommodating the sewage tank 5000. The dust collection chamber 2100 with an upward and forward opening is provided at the top end of the self-cleaning dust collection holder body 2000 and side by side with the water storage chamber 2700. A dust collection hood 2800 matching the opening of the dust collection chamber 2100 is provided on the dust collection chamber 2100, and is detachably buckled onto the dust collection chamber 2100. The dust collection chamber 2100 and the dust collection hood 2800 together form the dust collection bin 3000 for accommodating a garbage receiving device. At least a part of the outer surface of the dust collection hood 2800 serves as a part of an appearance surface of the self-cleaning dust collection holder. The upward and forward design of both the water storage chamber 2700 and the dust collection chamber 2100 facilitates the mounting and removal of the sewage tank 5000, the clean water tank 4000 and the dust collection hood 2800.

A body base 6000 is provided below the self-cleaning dust collection holder body 2000. In some embodiments, the body base 6000 is integrally provided below the self-cleaning dust collection holder body 2000. The body base 6000 is abutted against the bottom plate 1000 of the self-cleaning dust collection holder. Specifically, the bottom plate 1000 of the self-cleaning dust collection holder and the body base 6000 are sequentially provided along a second direction opposite to a direction of an arrow of the front-rear axis X.

A dust collection port 6100 is provided on the body base 6000, and is substantially located at the edge of a connection between the body base 6000 and the bottom plate 1000 of the self-cleaning dust collection holder. The dust collection port 6100 is configured to be butted with a dust outlet of the automatic cleaning equipment. The garbage in the dust box 300 of the automatic cleaning equipment enters the dust collection chamber 2100 of the self-cleaning dust collection holder body 2000 through the dust collection port 6100. In some embodiments, the dust collection port 6100 is further surrounded by a sealing rubber pad; and the sealing rubber pad is configured to seal the dust collection port 6100 after it is butted with the dust outlet of the automatic cleaning equipment so as to prevent the garbage from being leaked.

In some embodiments, the body base 6000 further includes a washing tank 6200. The washing tank 6200 is configured to clean a cleaning component on the automatic cleaning equipment, for example, supplement a cleaning liquid to a wet cleaning module of the automatic cleaning equipment, and/or contain debris removed from the wet cleaning module, and/or collect sewage generated in a process of cleaning the wet cleaning module, thereby facilitating the subsequent treatment of the debris and the sewage. In some embodiments, the washing tank 6200 is provided behind the dust collection port 6100.

**In** some embodiments, the self-cleaning dust collection holder further includes a wind duct, one end of which is connected with the dust collection port 6100 of the body base 6000, and the other end of which is connected with the dust collection chamber 2100. When the self-cleaning dust collection holder is in the dust collection state, sufficient negative pressure is formed in the dust collection bin 3000, such that the garbage in the dust box 300 is sucked into a dust collection bag in the dust collection bin 3000 through the dust collection port 6100 and the wind duct.

Referring to FIGs. 17 and 18 together, in some embodiments, the dust collection chamber 2100 includes a dust collection chamber rear wall 2134 and a pair of opposite dust collection chamber side walls. The dust collection chamber side walls further include a first dust collection chamber side wall 2131 and a second dust collection chamber side wall 2132. The first dust collection chamber side wall 2131 is close to an outer wall of the self-cleaning dust collection holder body 2000. The first dust collection chamber side wall 2131 and the second dust collection chamber side wall 2132 are opposite to each other, and are both abutted onto the dust collection chamber rear wall 2134.

Specifically, the end face of each dust collection chamber side wall may be of an arc-shaped structure, and the height of the dust collection chamber side wall may gradually decrease along the direction of the arrow of the front-rear axis X. At the position where the dust collection chamber side wall is abutted onto the dust collection chamber rear wall 2134, the height of the dust collection chamber side wall is equal to that of the dust collection chamber rear wall 2134. The dust collection chamber side wall adopts an arc-shaped structure with a low front and a high back, which can facilitate the mounting and removal of the dust collection hood 2800, and improve the beautiful appearance to a certain extent.

In some embodiments, the first dust collection chamber side wall 2131, the second dust collection chamber side wall 2132 and the dust collection chamber rear wall 2134 are integrated with the self-cleaning dust collection holder body 2000, such that the stability of the dust collection chamber 2100 can be improved, and the dust collection chamber 2100 can be prevented from shaking relative to the self-cleaning dust collection holder body 2000.

In some embodiments, the dust collection chamber 2100 further includes a circumferential inner wall 2150 which extends from the bottom wall of the dust collection chamber 2100 towards a direction distal from the cleaning dust collection holder body 2000. The dust collection chamber rear wall 2134 and the dust collection chamber side walls surround and are spaced from the circumferential inner wall 2150. Heights of all portions of the circumferential inner wall 2150 may be different. In some embodiments, the height of the circumferential inner wall 2150 gradually decreases along the direction of the arrow of the front-rear axis X. The structure design of the circumferential inner wall 2150 with a low front and a high back can facilitate the mounting and removal of the dust collection cover 2800.

In some embodiments, the circumferential inner wall 2150 may be of a closed-loop structure, and further includes a front inner wall 2153, a first side inner wall 2151, a rear inner wall 2154 and a second side inner wall 2152 which are connected end to end in sequence. The front inner wall 2153 is opposite to the rear inner wall 2154, and the first side inner wall 2151 is opposite to the second side inner wall 2152. Moreover, each inner wall of the circumferential inner wall 2150 may also have a corresponding relationship with the dust collection chamber rear wall 2134 and the dust collection chamber side walls. Specifically, the first side inner wall 2151 and the first dust collection chamber side wall 2131 are located on the same side and spaced apart, the rear inner wall 2154 and the dust collection chamber rear wall 2134 are located on the same side and spaced apart, and the second side inner wall 2152 and the second dust collection chamber side wall 2132 are located on the same side and spaced apart.

In some embodiments, the circumferential inner wall 2150 is integrated with the bottom wall of the dust collection chamber 2100, such that the stability of the circumferential inner wall 2150 can be improved.

In some embodiments, the dust collection chamber 2100 further includes a sealing pad 2140 which surrounds the circumferential inner wall 2150. The dust collection chamber rear wall 2134 and the dust collection chamber side walls are provided around the sealing pad 2140. In some embodiments, the sealing pad 2140 is of a closed-loop structure, and the width of each portion of the sealing pad 2140 is equal to or slightly larger than a spacing between the circumferential inner wall 2150 and each of the dust collection chamber rear wall 2134 and the dust collection chamber side walls, such that the sealing pad 2140 is in close contact with the circumferential inner wall 2150, the dust collection chamber rear wall 2134 and the dust collection chamber side walls. The material of the sealing pad 2140 may be various natural or synthetic rubbers. With the sealing pad 2140, the dust collection chamber 2100 and the dust collection hood 2800 buckled onto the dust collection chamber 2100 can be tightly attached to form a closed dust collection bin 3000.

In some embodiments, a dust bag bracket 2110 is further provided in the dust collection chamber 2100, is configured for mounting of a dust bag, is provided inside the dust collection chamber 2100, and extends from the bottom of the dust collection chamber towards a direction distal from the self-cleaning dust collection base body 2000. The dust bag bracket 2110 may be provided on the circumferential inner wall 2150 of the dust collection chamber 2100 through a fixing part such as a screw, or fixed to the bottom wall of the dust collection chamber through the bottom of the dust bag bracket 2110. In some embodiments, the dust bag bracket 2110 is provided at the first side inner wall 2151, and a side wall of the dust bag bracket 2110 distal from the dust collection chamber 2100 may be integrally formed with the first side inner wall 2151, such that the stability of the dust bag bracket 2110 can be improved. A hollow chamber body is provided inside the dust bag bracket 2110, and serves as a part of the wind duct of the self-cleaning dust collection holder, for example, as a tail end of the wind duct. The dust bag bracket 2110 includes a bracket side wall facing the interior of the dust collection bin 3000, and the bracket side wall is provided with a dust outlet connector connected with the dust collection port 6100 through a wind duct. The wind duct is configured to guide garbage into the dust collection bin 3000, such as into a dust bag in the dust collection bin 3000. The dust outlet connector is configured to be connected with an inlet of the dust bag to collect the garbage into the dust bag.

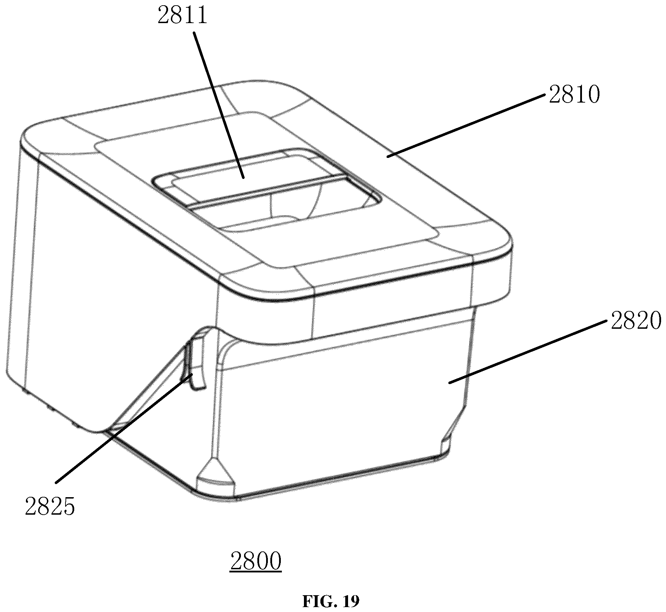

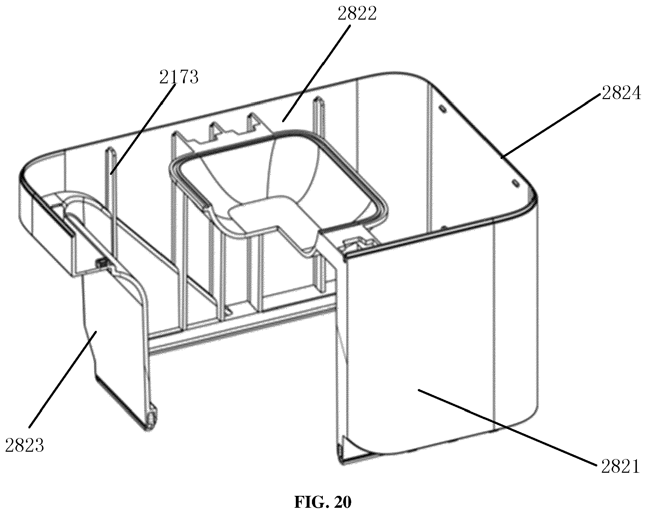

Referring to FIGs. 19 and 20 together, in some embodiments, the dust collection hood 2800 includes a dust collection hood cover body 2810 and a dust collection hood wall 2820. The dust collection hood cover body 2810 is located above the dust collection hood wall 2820, and the dust collection hood wall 2820 extends from the dust collection hood cover body 2810 in a direction distal from the dust collection hood cover body 2810. The dust collection hood cover body 2810 and the dust collection hood wall 2820 together form accommodating space in a surrounding manner. In response to the dust collection hood 2800 covering the dust collection chamber 2100, the circumferential inner wall 2150 is accommodated in the accommodating space, and a free end of the dust collection hood wall 2820 distal from the dust collection hood cover body 2810 is abutted onto the sealing pad 2140 to form the closed dust collection bin 3000.

In some embodiments, the dust collection hood wall 2820 further includes a dust collection hood front wall 2823, a first dust collection hood side wall 2821, a dust collection hood rear wall 2824 and a second dust collection hood side wall 2822 which are connected end to end in sequence. The dust collection hood front wall 2823 is opposite to the dust collection hood rear wall 2824, and the first dust collection hood side wall 2821 is opposite to the second dust collection hood side wall 2822.

In response to the dust collection hood 2800 being buckled onto the dust collection chamber 2100, at least a part of the dust collection hood first side wall 2821 is sandwiched between the first dust collection chamber side wall 2131 and the first side inner wall 2151; at least a part of the dust collection hood second side wall 2822 is sandwiched between the second dust collection chamber side wall 2132 and the second side inner wall 2152; and the dust collection hood rear wall 2824 is sandwiched between the dust collection chamber rear wall 2134 and the rear inner wall 2154.

In some embodiments, the dust collection hood 2800 further includes a handle part 2811 provided on a side of the dust collection hood cover body 2810 distal from the dust collection hood wall 2820. The handle part 2811 may be a pull ring, a pull rod, a handle and other structures provided on the dust collection hood cover body 2810. By disposing the handle part 2811, the dust collection hood 2800 can be placed and removed more conveniently, and it is convenient for the user to remove the garbage in the dust collection bin 3000 daily.

In some embodiments, the dust collection hood 2800 further includes a position limitation component 2825. The position limitation component 2825 is provided on the dust collection hood wall 2820, and may cooperate with a position limitation part provided in the dust collection chamber 2100, such that the dust collection hood 2800 can be firmly buckled onto the dust collection chamber 2100 without shaking. The position limitation part may be provided on at least one of the dust collection chamber rear wall 2134 and the dust collection chamber side walls. The position limitation component 2825 and the position limitation part are paired and cooperate with each other. In the embodiment shown in FIG. 19, the position limitation component 2825 is provided on the second dust collection hood side wall 2822; and the position limitation part corresponding to the position limitation component 2825 is provided on the second dust collection chamber side wall 2132. In response to the dust collection hood 2800 covering the dust collection chamber 2100, the position limitation component 2825 is abutted against the position limitation part.

In some embodiments, at least one of the dust collection chamber bottom wall, the circumferential inner wall 2150 and the dust collection hood wall 2820 is provided with a support rib 2173. The support rib 2173 may be of a strip-shaped structure projecting outwardly relative to the surface. In the embodiment shown in FIG. 20, the support ribs 2173 are at least provided on the inner surface of the second dust collection hood side wall 2822, and a plurality of support ribs 2173 is provided on the inner surface of the second dust collection hood side wall 2822. By providing the support ribs 2173, the dust bag in the dust collection bin 3000 is prevented from attaching to the dust collection chamber bottom wall, the circumferential inner wall 2150 and/or the dust collection hood wall 2820, avoiding adverse influence of the attachment on the flowing out of the airflow from the dust bag.

A dust collection system is further provided according to an embodiment of the present disclosure, and includes: automatic cleaning equipment and the self-cleaning dust collection holder according to the above embodiment.

According to the embodiments of the present disclosure, the garbage in the dust box of the automatic cleaning equipment is centralizedly collected into the dust collection bin of the self-cleaning dust collection holder through the dust collection system, such that the number of garbage disposal times for the user can be reduced, improving the user experience.

In the related art, since a dust box of automatic cleaning equipment has a limited capacity, the user often needs to bend down to clean the dust box, resulting in poor user experience. Therefore, a self-cleaning dust collection holder is provided according to an embodiment of the present disclosure. Through a dust collection system, garbage in a dust box of automatic cleaning equipment is centralizedly collected into a dust collection bin of the self-cleaning dust collection holder; and through a dust bag bracket and a dust bag which are provided in the dust collection bin, the garbage in the dust box is transferred into the dust bag located in the dust collection bin basically without leakage, such that the number of the garbage disposal times for the user can be reduced, improving the user experience. In addition, the dust bag adopts a design that a clamping plate cooperates with a sliding plate, and when the dust bag is detached from the dust bag bracket, the sliding plate is at a closed position, such that the garbage in the dust bag is prevented from being left in the dust collection bin.

Specifically, for the self-cleaning dust collection holder provided by the embodiment of the present disclosure, for example, FIG. 1 exemplarily shows a schematic diagram of an overall structure of a self-cleaning dust collection holder, and FIG. 2 exemplarily shows a schematic structure diagram of a self-cleaning dust collection holder body according to the present disclosure without a sewage tank, a clean water tank or a dust collection hood.

As shown in FIG. 1, a direction in which a bottom plate 1000 of the self-cleaning dust collection holder protrudes from the self-cleaning dust collection holder body 2000 is a forward direction, and a direction in which the bottom plate 1000 of the self-cleaning dust collection holder faces a rear wall of the self-cleaning dust collection holder body 2000 is a backward direction. A dust collection bin 3000 is located on the left side of the self-cleaning dust collection holder, a clean water tank 4000 is located on the right side of the dust collection bin 3000, and a sewage tank 5000 is located on the right side of the clean water tank 4000.

The self-cleaning dust collection holder body 2000 is configured to collect the garbage from the dust box of automatic cleaning equipment. In some embodiments, the self-cleaning dust collection holder body 2000 may be further provided with a dust collection bin 3000, a clean water tank 4000, a sewage tank 5000 and other components which are provided side by side. Specifically, as shown in FIG. 2, the self-cleaning dust collection holder body 2000 includes a water storage chamber 2700 and a dust collection chamber 2100. The water storage chamber 2700 with an upward and forward opening is provided at the top of the self-cleaning dust collection holder body 2000, and may further include a clean water bin for accommodating the clean water tank 4000 and a sewage bin for accommodating the sewage tank 5000. The dust collection chamber 2100 with an upward and forward opening is provided at the top end of the self-cleaning dust collection holder body 2000, and side by side with the water storage chamber 2700. A dust collection hood 2800 matching the opening of the dust collection chamber 2100 is provided on the dust collection chamber 2100, and detachably buckled onto the dust collection chamber 2100. The dust collection chamber 2100 and the dust collection hood 2800 together form the dust collection bin 3000. The upward and forward design of both the water storage chamber 2700 and the dust collection chamber 2100 facilitates the mounting and removal of the sewage tank 5000, the clean water tank 4000 and the dust collection hood 2800.

A body base 6000 is provided below the self-cleaning dust collection holder body 2000. In some embodiments, the body base 6000 is integrally provided below the self-cleaning dust collection holder body 2000. The body base 6000 is abutted against the bottom plate 1000 of the self-cleaning dust collection holder. Specifically, the bottom plate 1000 of the self-cleaning dust collection holder and the body base 6000 are sequentially provided along a second direction opposite to a direction of an arrow of the front-rear axis X.

A dust collection port 6100 is provided on the body base 6000, and is substantially located at the edge of a connection between the body base 6000 and the bottom plate 1000 of the self-cleaning dust collection holder. The dust collection port 6100 is configured to be butted with a dust outlet of the automatic cleaning equipment. The garbage in the dust box 300 of the automatic cleaning equipment enters the dust collection chamber 2100 of the self-cleaning dust collection holder body 2000 through the dust collection port 6100. In some embodiments, the dust collection port 6100 is further surrounded by a sealing rubber pad; and the sealing rubber pad is configured to seal the dust collection port 6100 after it is butted with the dust outlet of the automatic cleaning equipment so as to prevent the garbage from being leaked.

In some embodiments, the body base 6000 further includes a washing tank 6200. The washing tank 6200 is configured to clean a cleaning component on the automatic cleaning equipment, for example, supplement a cleaning liquid to a wet cleaning module of the automatic cleaning equipment, and/or contain debris removed from the wet cleaning module, and/or collect sewage generated in a process of cleaning the wet cleaning module, thereby facilitating the subsequent treatment of the debris and the sewage. In some embodiments, the washing tank 6200 is provided behind the dust collection port 6100.

In some embodiments, the self-cleaning dust collection holder further includes a wind duct, one end of which is connected with the dust collection port 6100 of the body base 6000, and the other end of which is connected with the dust collection chamber 2100. When the self-cleaning dust collection holder is in a dust collection state, sufficient negative pressure is formed in the dust collection bin 3000, such that the garbage in the dust box 300 is sucked into the dust bag in the dust collection bin 3000 through the dust collection port 6100 and the wind duct.

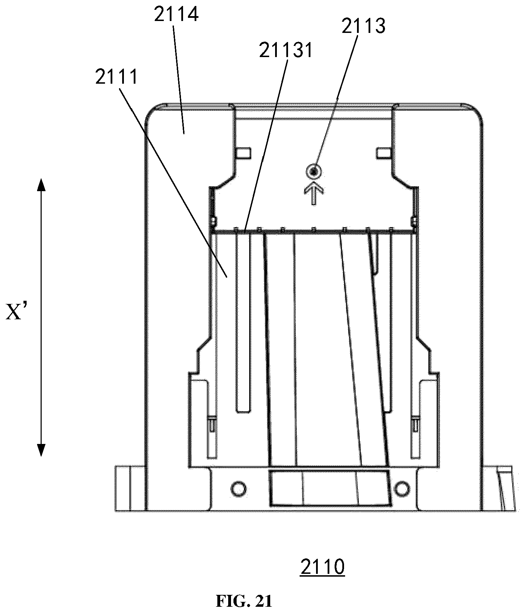

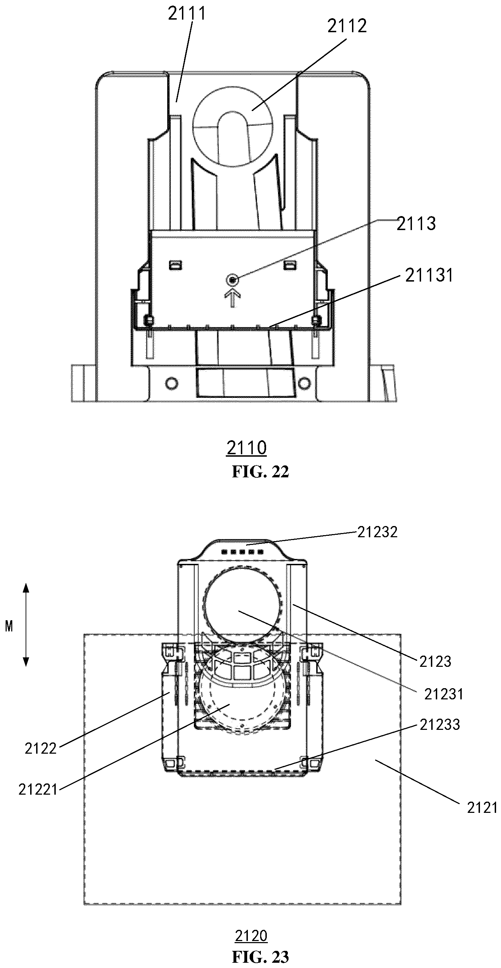

FIG. 21 is a schematic structure diagram of a dust bag bracket according to some embodiments of the present disclosure, in which a sliding stopper is at a first position. FIG. 22 is another schematic structure diagram of the dust bag bracket according to some embodiments of the present disclosure, in which the sliding stopper is at a second position.

In combination with FIGs. 1 and 2, in some embodiments, the self-cleaning dust collection holder further includes a dust bag bracket 2110 configured for mounting of a dust bag. The dust bag bracket 2110 is provided in the dust collection bin 3000, and for example, is provided on the inner side wall of the dust collection bin 3000 through a fixing part such as a screw, or fixed to the bottom face of the dust collection bin 3000 through the dust bag bracket 2110.

A hollow chamber body is provided inside the dust bag bracket 2110, and serves as a part of the wind duct of the self-cleaning dust collection holder, for example, as a tail end of the wind duct.

The dust bag bracket 2110 includes a bracket side wall 2111 facing the interior of the dust collection bin 3000, and the bracket side wall 2111 is provided with a dust outlet connector 2112. The dust outlet connector 2112 is connected with the dust collection port 6100 through the wind duct. The wind duct is configured to guide garbage into the dust collection bin 3000, such as into the dust bag in the dust collection bin 3000. The dust outlet connector 2112 is configured to be connected with an inlet of the dust bag to collect the garbage into the dust bag.

The dust bag bracket 2110 further includes a sliding stopper 2113 that can slide on the bracket side wall 2111. The sliding stopper 2113 is configured to be switchable between the first position and the second position. In response to the sliding stopper 2113 being at the first position, the sliding stopper 2113 shields the dust outlet connector 2112. In response to the sliding stopper 2113 being at the second position, the sliding stopper 2113 exposes the dust outlet connector 2112. As a consumable, the dust bag may be detachably mounted into the dust bag bracket 2110. With the above design, before the dust bag is mounted into the dust bag bracket 2110, the dust outlet connector 2112 is shielded by the sliding stopper 2113, and the dust collection bin 3000 is isolated from the wind duct. Therefore, a suction force generated by the fan cannot enter the wind duct from the dust collection bin, such that the garbage is prevented from entering the dust collection bin 3000 without the dust bag.

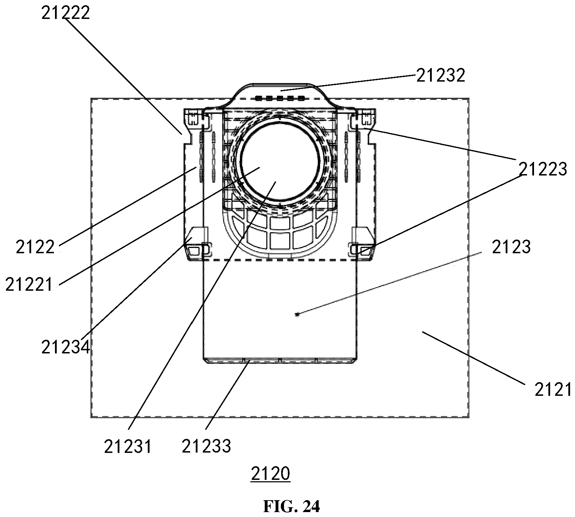

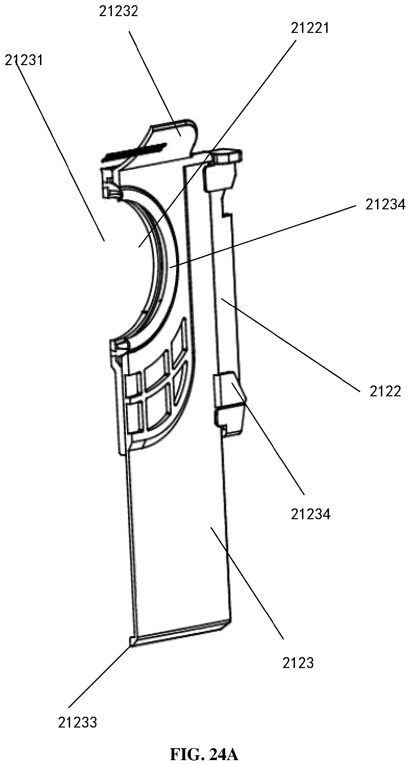

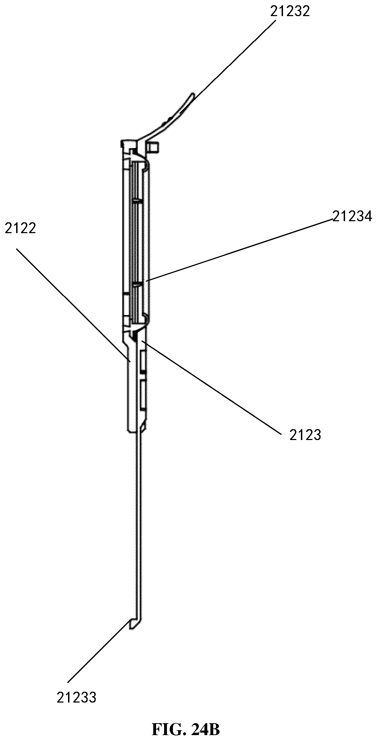

FIG. 23 is a schematic structure diagram of a dust bag according to some embodiments of the present disclosure, in which a sliding plate is at a closed position; FIG. 24 is a schematic structure diagram of a dust bag according to some embodiments of the present disclosure, in which the sliding plate is at an open position; FIG. 24A is a schematic partial structure diagram of the dust bag according to some embodiments of the present disclosure; FIG. 24B is a schematic structure diagram of a section plane in FIG. 24A; and FIG. 24A shows the section plane of the dust bag, and the dust bag is not shown in FIGs. 24A and 24B.

In some embodiments, as shown in FIG. 23, a dust bag 2120 is further provided according to the present disclosure, and is configured to be detachably mounted on the dust bag bracket 2110 to collect garbage.

The dust bag 2120 includes a dust bag body 2121, a clamping plate 2122 and a sliding plate 2123. The dust bag body 2121 is made of, for example, a material that is breathable but can filter fine particles, such as a non-woven fabric or a paper material. The dust bag body is configured to receive the garbage. The clamping plate 2122 is fixedly connected to the dust bag body 2121, and has a clamping plate opening 21221 which serves as an inlet of the dust bag body 2121. The sliding plate 2123 is slidably connected to the clamping plate 2122 and configured to switch between the closed position and the open position. In response to the sliding plate 2123 being at the closed position, the sliding plate 2123 shields the clamping plate opening 21221; and in response to the sliding plate 2123 being at the open position, the sliding plate 2123 exposes the clamping plate opening 21221.

Specifically, as shown in FIG. 23, the sliding plate 2123 has a sliding plate opening 21231. In response to the sliding plate 2123 being at the closed position, an orthographic projection of the sliding plate opening 21231 on the clamping plate 2122 does not overlap with the clamping plate opening 2821, and the sliding plate 2123 shields the clamping plate opening 22121, as shown in FIG. 23. In response to the sliding plate 2123 being at the open position, an orthographic projection of the sliding plate opening 21231 on the clamping plate 2122 at least partially overlaps with the clamping plate opening 21221, and the sliding plate 2123 exposes at least a part of the clamping plate opening 21221 through the sliding plate opening 21231, as shown in FIG. 24.

In some embodiments, the size of the sliding plate opening 21231 is, for example, larger than that of the clamping plate opening 21221; and in response to the sliding plate 2123 being at the closed position, the orthographic projection of the sliding plate opening 21231 on the clamping plate 2122 covers the clamping plate opening 2821. In some embodiments, the size of the sliding plate opening 21231 is, for example, smaller than that of the clamping plate opening 21221; and in response to the sliding plate 2123 being at the closed position, the orthographic projection of the sliding plate opening 21231 on the clamping plate 2122 falls into the clamping plate opening 21221. In some embodiments, the size of the sliding plate opening 21231 is, for example, equal to that of the clamping plate opening 21221; and in response to the sliding plate 2123 being at the closed position, the orthographic projection of the sliding plate opening 21231 on the clamping plate 2122 basically coincides with the clamping plate opening 21221.

Through the sliding cooperation between the sliding plate 2123 and the clamping plate 2122, the inlet of the dust bag can be closed, preventing the garbage in the dust bag from being leaked.

In some embodiments, as shown in FIGs. 23 to 24B, a flexible rubber ring 21224 projecting towards the sliding plate 2123 is arranged on the edge of the clamping plate opening 21221. In response to the sliding plate 2123 being at the open position, the flexible rubber ring 21224 passes through the sliding plate opening 21231 and projects towards a direction distal from the sliding plate 2123, such that when the sliding plate opening 21231 and the clamping plate opening 21221 are butted, the flexible rubber ring 21224 blocks up a slit at the two butted openings of the sliding plate 2123 and the clamping plate 2122, thereby achieving the sealing butting between the sliding plate opening 21231 and the clamping plate opening 21221. In response to the sliding plate 2123 being not at the open position, for example, at the closed position, at least a part of the flexible rubber ring 21224 may be squeezed between the sliding plate 2123 and the clamping plate 2122 to increase a frictional force therebetween, such that the sliding plate 2123 and the clamping plate 2122 cannot slide with respect to each other unless certain external force is applied, thereby stably keeping the sliding plate 2123 at the closed position, and preventing the garbage in the dust bag from being left.

In some embodiments, as shown in FIGs. 23 and 24, the sliding plate 2123 is slidable in a first direction M relative to the clamping plate 2122. The sliding plate 2123 includes position limitation projections 21233 provided on at least one side of the sliding plate 2123, for example, on two sides of the sliding plate 2123. The number of the position limitation projections 21233 is, for example, two. The position limitation projections project along a second direction perpendicular to the first direction M from the sliding plate 2123. The clamping plate 2122 includes position limitation parts 21223 provided at two ends of the clamping plate 2122 in the first direction. The position limitation parts are configured to block the position limitation projections 21233 in the first direction M to prevent the sliding plate 2123 from disengaging from the clamping plate 2122. The number of the position limitation parts 21223 is, for example, four, and the position limitation parts are symmetrically distributed on the two sides of the clamping plate 2122. When the sliding plate 2123 slides relative to the clamping plate 2122, the position limitation projections 21233 can only move between the corresponding position limitation parts 21223 located at the two ends of the clamping plate 2122 in the first direction.

In some embodiments, the sliding plate 2123 further includes a handle part 21232 which is provided on one end of the sliding plate in the first direction M and which is configured to facilitate a grip of an operator to move the sliding plate 2123.

The dust bag 2120 is configured to be detachably mounted on the dust bag bracket 2110. In response to the dust bag 2120 being mounted on the dust bag bracket 2110, the sliding stopper 2113 is at the second position to expose the dust outlet connector, the sliding plate is at the open position, and the clamping plate opening 21221 is butted with the dust outlet connector 2112. Based on the above arrangement, before the dust bag 2120 is mounted into the dust bag bracket 2110, the sliding stopper 2113 of the dust bag bracket is at the first position to shield the dust outlet connector 2112, such that the suction force generated by the fan cannot enter the wind duct from the dust collection bin, thereby preventing the garbage from entering the dust collection bin 3000 without the dust bag 2120.

When the dust bag 2120 is detached from the dust bag bracket 2110, the sliding plate 2123 is at the closed position, which prevents the garbage in the dust bag from being left in the dust collection bin. In addition, the dust bag with the sealed inlet also prevents the garbage in the dust bag from being left in the external environment.

Before the dust bag 2120 is mounted into the dust bag bracket 2110, the sliding plate 2123 of the dust bag bracket shields the clamping plate opening 21221 of the clamping plate 2122, such that during mounting the dust bag into the dust bag bracket 2110, the sliding stopper 2113 can be pushed from the first position to the second position and fixed at the second position by the combination action of the sliding plate 2123 and the clamping plate 2122. When the dust bag 2120 is pulled away from the dust bag bracket 2110, the sliding plate 2123 of the dust bag bracket shields the clamping plate opening 21221, preventing the garbage from being leaked. After the dust bag 2120 is mounted into the dust bag bracket 2110, the clamping plate opening 21221 (i.e., the inlet of the dust bag) is butted with the dust outlet connector 2112. Under the action of an airflow provided by the fan, the garbage in the dust box of the automatic cleaning equipment may sequentially pass through the dust collection port 6100 on the body base 6000, the wind duct in the self-cleaning dust collection holder, the dust outlet connector 2112 on the dust bag bracket 2110 and the clamping plate opening 21221 on the dust bag 2120, and then is collected into the dust bag body 2121.

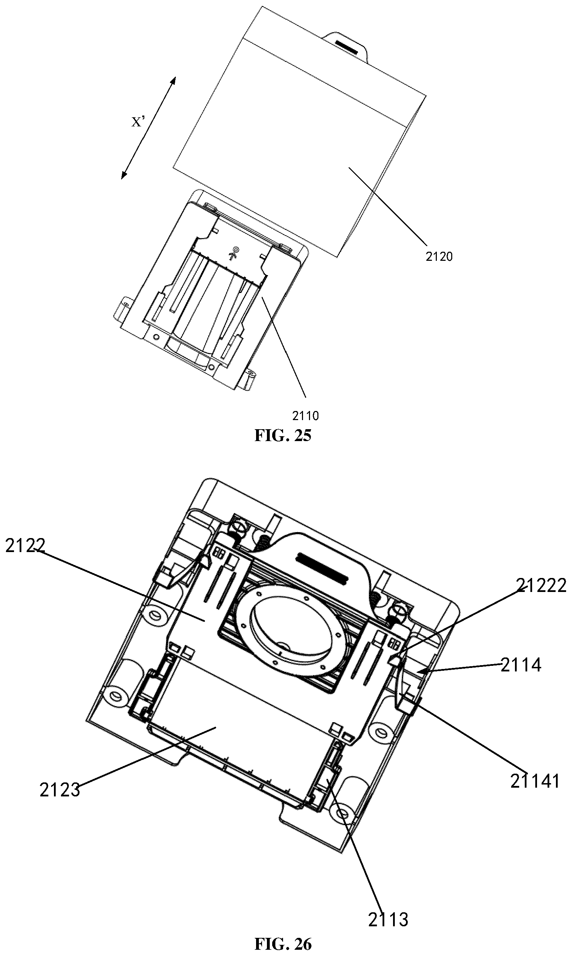

FIG. 25 is a schematic diagram of a pre-assembled structure of the dust bag bracket and the dust bag according to some embodiments of the present disclosure; and FIG. 26 is a schematic diagram of an assembled structure of the dust bag bracket and the dust bag according to some embodiments of the present disclosure.

In some embodiments, as shown in FIGs. 21 to 28, the dust bag bracket 2110 includes a sliding slot 2114, and at least a part of the sliding stopper 2113 is located in the sliding slot 2114, such that the sliding stopper 2113 can slide along an extension direction X' of the sliding slot 2114, and then switch between the first position and the second position. The number of the sliding slots 2114 is, for example, one or more, and as shown in FIGs. 21 to 28, the number of sliding slots 2114 is, for example, two. The two sliding slots 2114 are provided at the two opposite ends of the bracket side wall 2111 of the dust bag bracket 2110, respectively, and receive the two opposite ends of the sliding stopper 2113, respectively, such that the sliding stopper 2113 can slide along the extension direction X' of the sliding slots 2114.

As shown in FIGs. 21 to 28, the clamping plate 2122 and the sliding plate 2123 of the dust bag 2120 are configured to be inserted into the sliding slots 2114, and slide along the extension direction X' of the sliding slots 2114 to push the sliding stopper 2113 to slide along the extension direction X' of the sliding slots, such that the dust bag 2120 can be mounted onto the dust bag bracket 2110. Specifically, the two ends of each of the clamping plate 2122 and the sliding plate 2123 of the dust bag 2120 may be inserted into the two sliding slots 2114, respectively. In response to the dust bag 2120 being mounted onto the dust bag bracket 2110, the sliding plate 2123 is at the open position to expose the clamping plate opening 21221, and the sliding stopper 2113 is at the second position to expose the dust outlet connector 2112, such that the clamping plate opening 21221 is butted with the dust outlet connector 2112.

As shown in FIG. 25, in a process of mounting the dust bag 2120 onto the dust bag bracket 2110, the dust bag 2120 moves relative to the dust bag bracket 2110 along the extension direction X' of the sliding slots 2114. When the dust bag is mounted onto the dust bag bracket, the clamping plate 2122 and the sliding plate 2123 of the dust bag 2120 face the bracket side wall 2111 of the dust bag bracket 2110. In a process that the clamping plate 2122 and the sliding plate 2123 are inserted into the sliding slots 2114 along the extension direction X' of the sliding slots 2114, the sliding stopper 2113 can be pushed to move from the first position to the second position.

In some embodiments, a sliding stopper projection 21131 is provided at the lower end of the sliding stopper 2113, and is a strip-shaped projection which is along the lower edge of the sliding stopper 2113 and faces the dust collection bin 3000. After the sliding plate 2123 is inserted into the sliding slots 2114, the lower end of the sliding plate 2123 may be abutted against the sliding stopper projection 21131. With the lower end of the sliding plate 2123 and the sliding stopper projection 21131 that are abutted against each other, the sliding plate 2123, when sliding downwards along the extension direction X' of the sliding slots 2114, can push the sliding stopper 2113 to also slide along the extension direction X' of the sliding slots. In some embodiments, a sliding plate projection 21233 is also provided at the lower end of the sliding plate 2123, and may be a strip-shaped projection which is along the lower edge of the sliding plate 2123 and faces the dust collection bin 3000. After the sliding plate 2123 is inserted into the sliding slots 2114, the sliding plate projection 21233 may be just abutted above the sliding stopper projection 21131. With the sliding plate projection 21233 and the sliding stopper projection 21131 that are abutted against each other, the sliding plate 2123, when sliding downwards along the extension direction X' of the sliding slots 2114, can push the sliding stopper 2113 to also slide along the extension direction X' of the sliding slots.

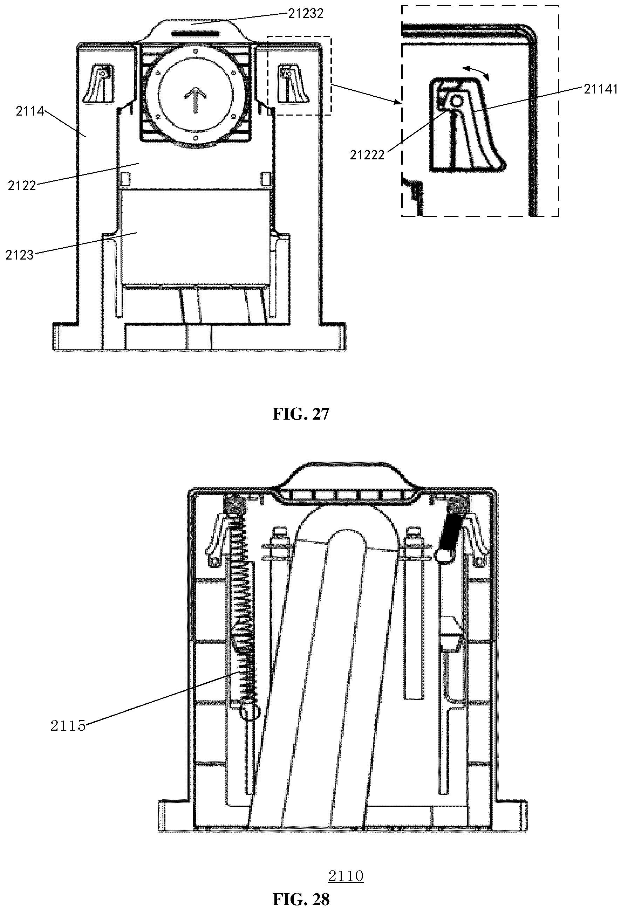

FIG. 26 shows a section view of an assembled structure of the dust bag bracket and the dust bag according to some embodiments of the present disclosure; and FIG. 27 shows a schematic diagram of an assembled structure of the dust bag bracket and the dust bag according to some embodiments of the present disclosure.

As shown in FIGs. 26 and FIG. 27, a buckling part 21141, such as an elastic buckle, is provided in each sliding slot 2114, and may move in an approximate arc as shown by the arrow in FIG. 27. The clamping plate 2122 has clamping plate clamping slots 21222 matching the buckling parts 21141. In response to the dust bag 2120 being mounted onto the dust bag bracket 2110, the buckling parts 21141 are clamped into the clamping plate clamping slots 21222. The clamping plate 2122 slides along the extension direction X' of the sliding slots 2114 to clamping positions, the clamping plate opening 21221 is butted with the dust outlet opening 2112, and the buckling parts 21141 match and are clamped in the clamping plate clamping slots 21222, such that the dust bag 2120 is fixed to the dust bag bracket 2110.

The position limitation projection 212234 on the sliding plate 2123 also serves as an unlocking projection 21234, and thus, is also called the unlocking projection 21234 which is configured to squeeze the buckling part 21141 to enable the buckling part 21141 to be disengaged from the clamping plate clamping slot 21222 when the sliding plate 2123 is pulled out of the sliding slots 2114, so as to release the fixing of the buckling part 21141 to the clamping plate 2122 to allow the dust bag 2120 to be disengaged from the dust bag bracket 2110 successfully. In some embodiments, the unlocking projection 21234 further has a position limitation function, and cooperates with the position limitation part 21223 on the clamping plate 2122 to prevent the sliding plate 2123 from being disengaged from the clamping plate 2122.

In some embodiments, as shown in FIG. 28, the dust bag bracket 2110 is provided with a flexible part 2115, such as a spring. The flexible part 2115 is connected to the sliding stopper 2113, and is configured to enable the sliding stopper 2113 to have a tendency to be at the first position. When the sliding stopper 2113 is not subjected to an external force, the sliding stopper 2113 is at the first position under the action of the flexible part 2115, such that the sliding stopper 2113 shields the dust outlet connector 2112. In some embodiments, the flexible part 2115 is located inside the dust bag bracket 2110, and the extension direction of the flexible part 2115 is basically the same as that of the sliding slots 2114. One end of the flexible part 2115 is fixed onto the upper part of the dust bag bracket 2110, and the other end of the flexible part 2115 is connected to the sliding stopper 2113. The number of the flexible parts 2115 may be one or more. When the number of the flexible parts 2115 is, for example, two, the two flexible parts 2115 may be provided at the two opposite ends of the dust bag bracket 2110, respectively.

A process of mounting and dismounting the dust bag 2120 and the dust bag bracket 2110 will be described in detail below.

Before the dust bag 2120 is mounted into the dust bag bracket 2110, the sliding stopper 2113 on the dust bag bracket 2110 is at the first position to shield the dust outlet connector 2112, and the sliding plate 2123 on the dust bag 2120 is at the closed position to shield the clamping plate opening 2122, that is, the state is shown in FIG. 23. In the process that the dust bag 2120 is mounted into the dust bag bracket 2110, the clamping plate 2122 and the sliding plate 2123 are inserted into the sliding slots 2114 along the extension direction X' of the sliding slots 2114. When the user holds the handle part 21232 of the sliding plate 2123 to push the dust bag 2120 into the sliding slots 2114, the sliding plate 2123 gradually moves from the closed position to the open position relative to the clamping plate 2122, such that the sliding plate opening 21231 of the sliding plate 2123 is aligned with the clamping plate opening 21221 of the clamping plate 2122. Meanwhile, the clamping plate 2122 and the sliding plate 2123 push against the sliding stopper 2113 to move it from the first position to the second position, such that the sliding stopper 2113 exposes the dust outlet connector 2112. When the clamping plate 2122 slides to the clamping position along the extension direction X' of the sliding slots 2114, the clamping plate opening 21221 is butted with the dust outlet connector 2112, and the buckling part 21141 matches and is clamped in the clamping plate clamping slot 21222, such that the dust bag 2120 is fixed onto the dust bag bracket 2110. In this case, the flexible rubber ring 21224 on the dust bag passes through the sliding plate opening 21231 to abut on the edge of the dust outlet connector 2112, such that the clamping plate opening 21221 of the dust bag is butted with the dust outlet connector 2112 of the dust bag bracket in a sealing manner, thereby avoiding garbage leakage during the dust collection.

In a process that the dust bag 2120 is detached from the dust bag bracket 2110, an operator holds the handle part 21232 of the sliding plate 2123 to gradually pull the sliding plate 2123 out of the sliding slots 2114 of the dust bag bracket 2110. In this process, the sliding plate 2123 gradually moves from the open position to the closed position relative to the clamping plate 2122, such that the sliding plate 2123 shields the clamping plate opening 21221. In addition, the unlocking projection 21234 on the sliding plate 2123 squeezes the buckling part 21141 to enable the buckling part 21141 to be disengaged from the clamping plate clamping slot 21222. Meanwhile, due to an interaction between the unlocking projection 21234 and the position limitation part 21223 on the clamping plate 2122, the handle part 21232 of the sliding plate 2123 is drawn continuously to pull out the sliding plate 2123 and the clamping plate 2122 from the sliding slots 2114 of the dust bag bracket 2110, such that the dust bag 2120 is disengaged from the dust bag bracket 2110. The sliding stopper 2113 returns to the first position under the action of the flexible part, such that the sliding stopper 2113 shields the dust outlet connector 2112.

In the related art, a fan of a self-cleaning dust collection holder is provided in a fan bin which is, for example, adjacent to and connected with a dust collection bin, and the dust collection bin and the fan bin are connected with each other through a ventilation hole. Air in the dust collection bin is sucked out by a suction force generated by the fan in the fan bin during working, such that negative pressure is formed in the dust collection bin, and the sucked-out air is discharged to the outside of a pile through a wind duct in the fan bin. During performing of a dust collection operation by the self-cleaning dust collection holder, once a dust bag in the dust collection bin is fully filled, the wind duct for dust collection is not smooth, which may lead to excessive negative pressure in the dust collection bin and thus damage to the fan.

Therefore, a self-cleaning dust collection holder is provided according to an embodiment of the present disclosure. According to the self-cleaning dust collection holder, a safety valve is provided in a dust collection bin, such that when negative pressure in the dust collection bin is greater than a safety threshold, the dust collection bin can be connected with the outside atmosphere to avoid excessive negative pressure in the dust collection bin.

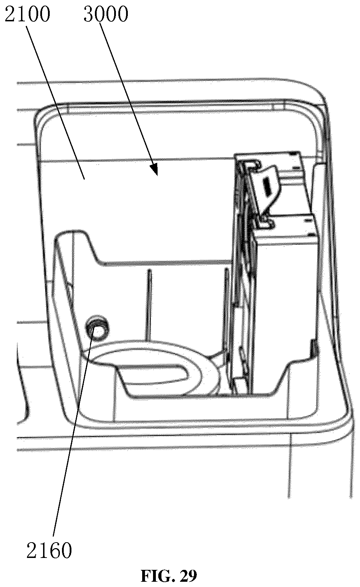

FIG. 29 is a schematic structure diagram of a dust collection chamber provided according to some embodiments of the present disclosure. Combined with FIG. 29, the self-cleaning dust collection holder provided according to some embodiments of the present disclosure is characterized by including a bottom plate 1000 of the self-cleaning dust collection holder and a self-cleaning dust collection holder body 2000. The self-cleaning dust collection holder body 2000 is detachably connected to the bottom plate 1000 of the self-cleaning dust collection holder. The self-cleaning dust collection holder body 2000 includes a dust collection bin 3000. Negative pressure is formed in the dust collection bin 3000 under the action of a fan, such that garbage is collected in a garbage receiving device, such as a dust bag, in the dust collection bin through a dust channel of the self-cleaning dust collection holder. A safety valve 2160 is provided in the dust collection bin 3000, and is configured to communicate the dust collection bin 3000 with the outside atmosphere in response to the negative pressure in the dust collection bin 3000 being greater than the safety threshold, thereby avoiding excessive negative pressure in the dust collection bin.

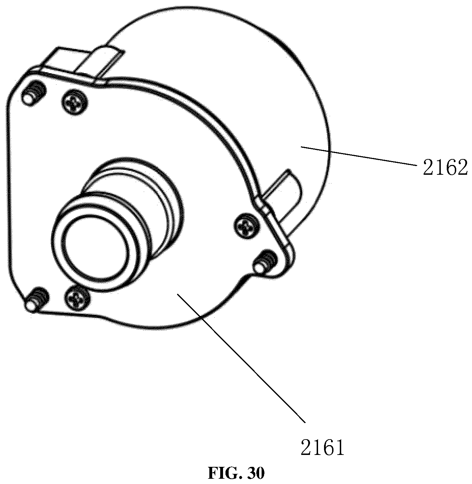

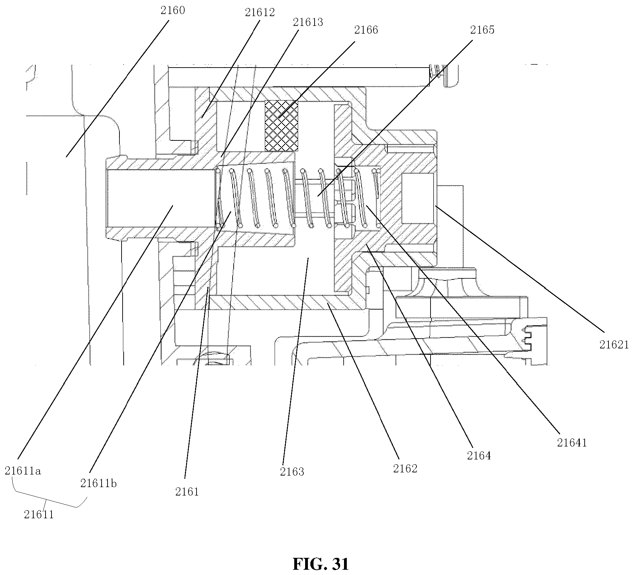

FIG. 30 is a schematic structure diagram of a safety valve provided according to some embodiments of the present disclosure. FIG. 31 is a schematic cross-sectional structure diagram of the safety valve provided according to some embodiments of the present disclosure, and shows a situation that the safety valve is mounted in the dust collection chamber.

As shown in FIGs. 30 and 31, the safety valve 2160 includes a safety valve base 2161 and a safety valve body 2162. A base through hole 21611 is formed in the safety valve base 2161. The safety valve body 2162 is buckled onto the safety valve base 2161 to form a safety valve chamber body 2163 with the safety valve base 2161. The base through hole 21611 communicates the dust collection bin 3000 with the safety valve chamber body 2163. An air inlet 21621 of the safety valve is formed in one side, distal from the safety valve base 2161, of the safety valve body 2162, and is connected with the outside atmosphere. The safety valve 2160 further includes a safety valve core 2164 movably provided in the safety valve chamber body 2163 and configured to block the air inlet 21621 of the safety valve, such that the safety valve chamber body 2163 is isolated from the outside atmosphere.

Specifically, the air inlet 21621 of the safety valve is sealed and blocked by the safety valve core 2164 normally, such that the safety valve chamber body 2163 is isolated from the outside atmosphere, and basically airtight space is formed in the dust collection bin 3000. Thus, it is convenient for the dust collection bin 3000 to form negative pressure therein under the action of the fan, such that the garbage can be collected in the garbage receiving device, such as the dust bag, in the dust collection bin 3000 through the dust channel of the self-cleaning dust collection holder.

When the self-cleaning dust collection holder is working normally, the negative pressure in the dust collection bin is usually less than or equal to the safety threshold. In this case, the safety valve core blocks the air inlet of the safety valve up, and the garbage is collected in the garbage receiving device, such as the dust bag, in the dust collection bin 3000 through the dust channel of the self-cleaning dust collection holder. However, when the garbage receiving device, such as the dust bag, is fully filled with garbage or the dust channel of the self-cleaning dust collection holder is blocked, the continuous-working fan may cause the negative pressure in the dust collection bin 3000 to be excessively low, disabling to achieve a desired dust collection effect. When the negative pressure in the dust collection bin 3000 is greater than the safety threshold, the external atmospheric pressure is significantly higher than the pressure in the dust collection bin 3000 and the safety valve chamber body 2163. Under the action of the difference between the external atmospheric pressure and the pressure in the dust collection bin 3000 and the safety valve chamber body 2163, the safety valve core 2164 may move towards the safety valve base 2161, and the air inlet 21621 of the safety valve is opened, such that the safety valve chamber body is connected with the outside through the air inlet 21621 of the safety valve. The outside atmosphere may sequentially pass through the air inlet 21621 of the safety valve, the safety valve chamber body 2163 and the base through hole 21611 and then enter the dust collection bin 3000, so as to balance the excessively low negative pressure in the dust collection bin 3000.

In some embodiments, as shown in FIGs. 30 and 31, the safety valve 2160 further includes a flexible part 2165. The flexible part 2165 is provided in the safety valve chamber body 2163 and has a tendency to enable the safety valve core 2164 to be distal from the safety valve base 2161. The flexible part 2165 keeps the safety valve core 2164 in a state of blocking the air inlet 21621 of the safety valve.

In some embodiments, the flexible part 2165 is a spring. One end with the spring is abutted against the safety valve base 2161, and the other end thereof is abutted against the safety valve core 2164.

In some embodiments, the safety valve base 2161 includes a safety valve base body 21612, and a raised portion 21613 extending from the safety valve base body 21612 towards the air inlet 21621 of the safety valve. The base through hole 21611 runs through the safety valve base body 21612 and the raised portion 21613, and includes a first through sub-hole 21611a and a second through sub-hole 21611b which are connected with each other. The first through sub-hole 21611a and the second through sub-hole 21611b are sequentially provided near the air inlet 21621 of the safety valve. The first through sub-hole 21611a is connected with the dust collection bin 3000, and the second through sub-hole 21611b is connected with the safety valve chamber body 2163. The inner diameter of the first through sub-hole 21611a is smaller than that of the second through sub-hole 21611b. One end of the spring is provided in the second through sub-hole 21611b, and is abutted against a junction of the first through sub-hole 21611a and the second through sub-hole 21611b. A blind hole 21641 is formed in one side, facing the safety valve base 2161, of the safety valve core 2164, and the other end of the spring is provided in the blind hole 21641 and is abutted against the bottom face of the blind hole 21641. Based on this arrangement, since the two ends of the spring are accommodated in the second through sub-hole 21611b and the blind hole 21641, respectively, it is thus possible to keep force applied to the spring substantially in the horizontal direction shown in FIG. 5, preventing the flexible part from deviating from the horizontal direction during expansion and contraction process. In addition, the whole safety valve 2160 may be lighter and thinner.

In some embodiments, as shown in FIGs. 30 and 31, the safety valve 2160 further includes a trigger switch 2166. The trigger switch 2166 is provided in the safety valve chamber body 2163, and configured to generate a control signal when triggered. The control signal is configured to give an alarm and/or control the fan to stop working.

In some embodiments, when a value of the distance between the safety valve core 2164 and the safety valve base 2161 is decreased to a predetermined value in response to the movement of the safety valve core 2164 towards the safety valve base 2161, the safety valve core 2164 is in contact with and triggers the trigger switch 2166.

The specific working principle of the safety valve in the present disclosure is as follows.

When the self-cleaning dust collection holder performs a dust collection operation, a suction force is generated by the fan of the self-cleaning dust collection holder to enable negative pressure to be formed in the dust collection bin 3000, such that the garbage is collected in the garbage receiving device, such as the dust bag, in the dust collection bin 3000 through the dust channel of the self-cleaning dust collection holder. When the dust channel of the self-cleaning dust collection base is blocked or the garbage receiving device, such as the dust bag, in the dust collection bin 3000, is fully filled with the garbage, the negative pressure in the dust collection bin 3000 may exceed the safety threshold under the action of the continuous-working fan. When the negative pressure in the dust collection bin 3000 may be greater than the safety threshold, the safety valve core 2164 in the safety valve 2160 overcomes a flexible force of the flexible part 2165 to move towards the safety valve base 2161 under the action of the difference between the external atmospheric pressure and the negative pressure in the dust collection bin 3000, such that the air inlet 21621 of the safety valve is opened, and the dust collection bin 3000 is connected with the external atmosphere through the safety valve chamber body 2163, thereby preventing the excessive negative pressure in the dust collection bin 3000.

When the distance moved by the safety valve core 2164 in the safety valve 2160 towards the safety valve base 2161 is greater than a predetermined distance, that is, the value of the distance between the safety valve core 2164 and the safety valve base 2161 is decreased to a predetermined value, the safety valve core 2164 triggers the trigger switch 2166. The trigger switch 2166 is, for example, a microswitch, and is configured to send a control signal after being triggered. For example, the control signal is configured to control the fan to stop working, so as to protect the fan. For example, the control signal is configured to give an alarm, such as a flashing alarm light or alarm sound, to remind the user of checking whether the dust bag is full or the dust channel of the self-cleaning dust collection holder is blocked.

In some embodiments, as shown in FIG. 29, the safety valve 2160 is provided on the inner side wall of the dust collection bin 3000, such as on the rear wall of the dust collection chamber 2100. In other embodiments, the safety valve 2160 may also be provided at other positions, such as on the bottom wall of the dust collection bin.

As shown in FIG. 31, a self-cleaning dust collection holder is provided according to some embodiments of the present disclosure, and includes a bottom plate 1000 of the self-cleaning dust collection holder and a self-cleaning dust collection holder body 2000. The self-cleaning dust collection holder body 2000 is detachably connected to the bottom plate 1000 of the self-cleaning dust collection holder. The self-cleaning dust collection holder body 2000 includes a dust collection bin 3000. Negative pressure is formed in the dust collection bin 3000 under the action of a fan, such that garbage is collected in a garbage receiving device, such as a dust bag, in the dust collection bin through a dust channel of the self-cleaning dust collection holder. A safety valve 2160 is provided in the dust collection bin 3000, and a trigger switch 2166 is provided in the safety valve 2160. The safety valve 2160 is configured to trigger a trigger switch 2166 in a safety valve chamber body in response to the negative pressure in the dust collection bin being greater than a safety threshold, such that the trigger switch 2166 generates a control signal. The control signal is configured to give an alarm and/or control the fan to stop working. Specifically, the control signal is configured to, for example, give an alarm, such as sound or flashing light, or send a message to a user's terminal, such as a mobile phone, to remind the user that the self-cleaning dust collection holder is in an abnormal state and to remind the user of checking whether the dust bag is full or the dust channel of the self-cleaning dust collection holder is blocked. The control signal is also configured, for example, to control the fan to stop working, so as to avoid damage to the fan caused by its overload operation.

In the related art, the fan of the self-cleaning dust collection holder is provided in the fan bin which is provided at the bottom of the dust collection bin. A ventilation hole is formed in the bottom of the dust collection bin. A suction force generated by the fan during working sucks air in the dust collection bin out, and the air is discharged outside the self-cleaning dust collection holder body 2000 through the wind duct in the fan bin. As the distance between the dust collection port and the washing tank is relatively short, the robot may bring residual water in the washing tank into the dust collection port in a process that the robot climbs on or leaves a pile. If the water volume is too large, the fan may suck the water into the dust collection bin through the wind duct when working, and excessive accumulated water in the dust collection bin may cause damage to the fan and an electric shock risk.

Therefore, a self-cleaning dust collection holder is provided according to some embodiments of the present disclosure provide, and includes a bottom plate of the self-cleaning dust collection holder and a self-cleaning dust collection holder body. The bottom plate of the self-cleaning dust collection holder is detachably connected to the self-cleaning dust collection holder body. The self-cleaning dust collection holder body includes: a dust collection bin and a fan bin which are abutted onto each other and which are connected with each other through a fan channel, as well as a waterproof filter surrounding the fan channel and configured to allow gas to pass through and prevent water from passing through. Accumulated water in the dust collection bin is prevented from entering a fan in the fan bin, thereby avoiding damage to the fan. The surrounding mode may be any mode that can ensure the mutual cooperation between the filter and the fan channel, such as the waterproof filter being directly embedded into one end of the fan channel or inside the fan channel, and the waterproof filter buckled onto one end of the fan channel.

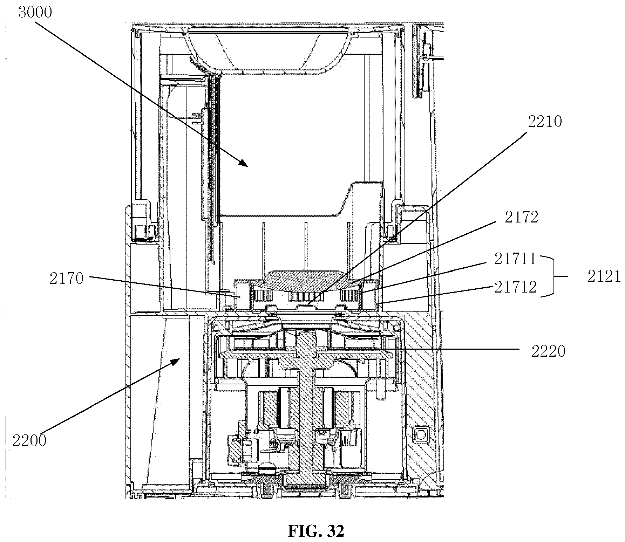

FIG. 32 is a schematic partial cross-sectional structure diagram of a dust collection bin and a fan bin according to some embodiments of the present disclosure. As shown in FIG. 32, a self-cleaning dust collection holder is provided according to some embodiments of the present disclosure provide, and includes a bottom plate 1000 of the self-cleaning dust collection holder and a self-cleaning dust collection holder body 2000. The bottom plate 1000 of the self-cleaning dust collection holder is detachably connected to the self-cleaning dust collection holder body 2000. The self-cleaning dust collection holder body 2000 includes: a dust collection bin 3000 and a fan bin 2200 which are abutted onto each other and which are connected with each other through a fan channel 2210, as well as a waterproof filter 2170 surrounding the fan channel 2210 and configured to allow gas to pass through and prevent water from passing through. Accumulated water in the dust collection bin 3000 is prevented from entering a fan 2220 in the fan bin 2200, thereby avoiding damage to the fan 2220.

As shown in FIG. 32, the fan bin 2200 and the dust collection bin 3000 are sequentially distal from the bottom plate 1000 of the self-cleaning dust collection holder, and the fan channel 2210 is provided, for example, on the bottom wall of the dust collection bin 3000.

In some embodiments, as shown in FIG. 32, a clamping slot 2171 is provided on the bottom wall of the dust collection bin 3000, and surrounds the fan channel 2210. The waterproof filter 2170 is provided in the clamping slot 2171, and the clamping slot 2171 is configured for fixing of the waterproof filter 2170. In some embodiments, the clamping slot 2171 is integrally formed with the bottom wall of the dust collection bin 3000.

In some embodiments, as shown in FIG. 32, the clamping slot 2171 includes a first slot wall 21711 and a second slot wall 21712. The first slot wall 21711 surrounds the fan channel 2210, the second slot wall 21712 surrounds the first slot wall 21711, and the waterproof filter 2170 is sandwiched between the first slot wall 21711 and the second slot wall 21712. The first slot wall 21711 and the second slot wall 21712 define the position of the waterproof filter 2170, such that the waterproof filter fixedly surrounds the fan channel 2210.

In some embodiments, the first slot wall 21711 and the second slot wall 21712 extend from the bottom wall of the dust collection bin 3000 in a direction distal from the fan bin 2200, and the second slot wall 21712 is lower than the waterproof filter 2170. Thus, at least a part of the outer side wall of the waterproof filter 2170 is exposed in the dust collection bin 3000. When the fan 2220 works, airflow can pass through the waterproof filter 2170 from the dust collection bin 3000 and enter the fan bin 2200 through the fan channel 2210.

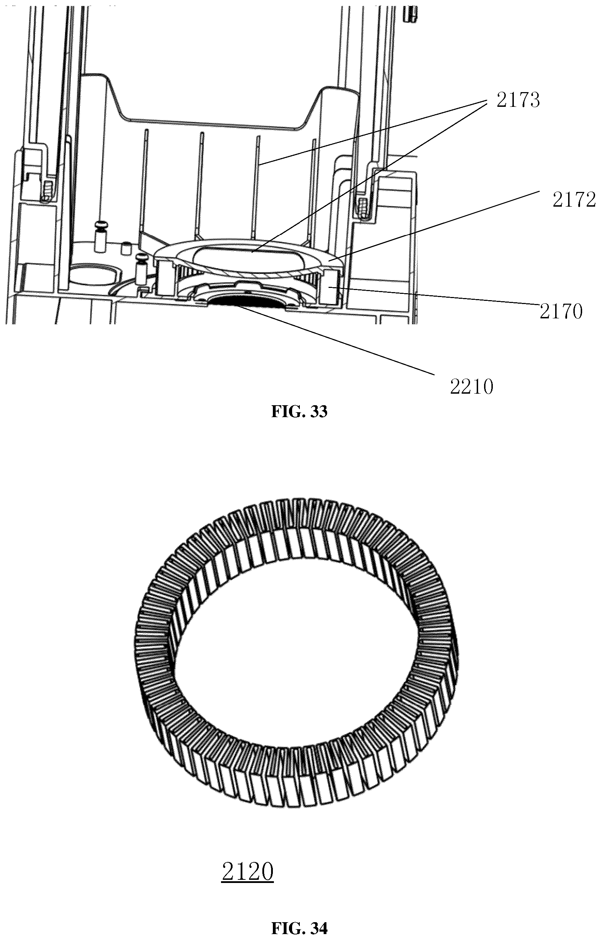

FIG. 33 is a schematic partial cross-sectional structure diagram of the dust collection bin provided according to some embodiments of the present disclosure. As shown in FIGs. 32 and 33, in some embodiments, the self-cleaning dust collection holder further includes a cover body 2172 buckled onto the end, distal from the fan bin 2200, of the waterproof filter 2170, and an orthographic projection of the cover body 2172 on the bottom wall of the dust collection bin 3000 covers the fan channel 2210. The cover body 2172 covers the fan channel 2210, such that the airflow in the dust collection bin 3000 can only pass through the waterproof filter 2170 from the sides, and then enters the fan bin 2200 through the fan channel 2210.

In some embodiments, as shown in FIGs. 32 and 33, the self-cleaning dust collection holder further includes support ribs 2173. The support ribs 2173 are provided around the waterproof filter 2170, so as to avoid poor ventilation caused by the fact that the waterproof filter 2170 is wrapped by the dust bag in the dust collection bin 3000.

In some embodiments, the support ribs 2173 are provided on at least one of the top face of the cover body 2172, the bottom wall of the dust collection bin 3000 and the side walls of the dust collection bin 3000.

FIG. 34 is a schematic structure diagram of a waterproof filter according to some embodiments of the present disclosure, in which the waterproof filter 2170 is ring-shaped.

As shown in FIGs. 32 to 34, even if some water is accumulated at the bottom of the dust collection bin 3000, when the amount of water is relatively small and the water level is lower than the second slot wall 21712, in some embodiments, the second slot wall 21712 integrally formed with the bottom wall of the dust collection bin 3000 can block the water accumulated at the bottom of the dust collection bin 3000 from entering the fan channel 2210. Even if the water level is higher than that of the second slot wall 21712, with the provided waterproof filter 2170, the water accumulated at the bottom of the dust collection bin 3000 can still be blocked by the waterproof filter 2170, such that the water is prevented from entering the fan 2220 in the fan bin 2200 through the fan channel 2210, thereby avoiding damage to the fan.

In the related art, when the self-cleaning dust collection holder performs the dust collection operation, the fan in the fan bin is in a working state, and the airflow generated by the fan flows in the fan bin, which generates relatively loud noise. In order to meet a noise requirement on household electronic equipment and avoid causing discomfort to the user, the self-cleaning dust collection holder is required to reduce its noise as much as possible during the dust collection operation.

Therefore, a self-cleaning dust collection holder is provided according to some embodiments of the present disclosure provide, and includes a bottom plate of the self-cleaning dust collection holder and a self-cleaning dust collection holder body. The bottom plate of the self-cleaning dust collection holder is detachably connected to the self-cleaning dust collection holder body. The self-cleaning dust collection holder body includes: a dust collection chamber with an upward and forward opening provided at the top end of the self-cleaning dust collection holder body; a dust collection hood detachably buckled onto the dust collection chamber to form a dust collection bin for accommodating a garbage receiving device; a fan bin adjacent to the dust collection bin and configured to accommodate a fan; and a silencing structure provided in the fan bin and configured to reduce noise generated when the fan works. The noise generated by the airflow when the fan works is reduced by disposing the silencing structure in the fan bin.

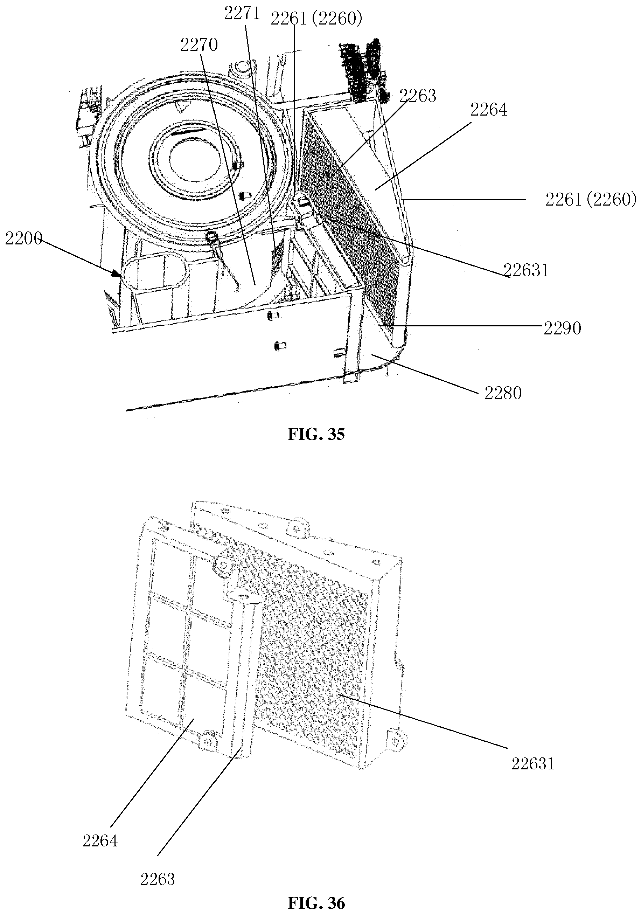

FIG. 35 is a schematic structure diagram of the fan bin according to some embodiments of the present disclosure. As shown in FIG. 35, a self-cleaning dust collection holder is provided according to some embodiments of the present disclosure, and includes a bottom plate 1000 of the self-cleaning dust collection holder and a self-cleaning dust collection holder body 2000. The bottom plate 1000 of the self-cleaning dust collection holder is detachably connected to the self-cleaning dust collection holder body 2000. The self-cleaning dust collection holder body 2000 includes a dust collection chamber 2100, a dust collection hood 2800, a fan bin 2200 and a silencing structure 2260. Specifically, the dust collection chamber 2100 with an upward and forward opening is provided at the top end of the self-cleaning dust collection holder body 2000. The dust collection hood 2800 is detachably buckled onto the dust collection chamber 2100 to form a dust collection bin 3000 for accommodating a garbage receiving device, such as a dust bag, for accommodating garbage. The fan bin 2200 is adjacent to the dust collection bin 3000, and is configured to accommodate the fan 2220. The fan bin 2200 is provided, for example, on one side, proximal to the bottom plate 1000 of the self-cleaning dust collection holder, of the dust collection bin 3000, and the dust collection bin 3000 and the fan bin 2200 are connected with each other through a fan channel 2210 which is provided, for example, on the bottom wall of the dust collection bin 3000. The silencing structure 2260 is provided in the fan bin 2200, and airflow generated by the fan 2220 flows through the silencing structure 2260; and the silencing structure 2260 is configured to reduce the noise generated by the fan 2220 when it works.

In some embodiments, as shown in FIG. 35, the fan bin 2200 includes a fan hood body 2270 and a wind outlet 2280 of the fan bin. The fan hood body 2270 is of, for example, a barrel-shaped structure, and is configured to accommodate the fan 2220. A hood body wind outlet 2271 is formed in the side wall of the fan hood body 2270, and is, for example, a grid-like opening in the side wall of the fan hood body 2270. The wind outlet 2280 of the fan bin is provided on the side wall of the fan bin 2200, such that the fan bin 2200 is connected with the outside atmosphere. The silencing structure 2260 is provided between the hood body wind outlet 2271 and the wind outlet 2280 of the fan bin. Thus, in a process that the airflow generated by the fan 2220 flows out of the fan bin 2200 from the hood body wind outlet 2271 through the wind outlet 2280 of the fan bin, the airflow flows through the silencing structure 2260, thereby reducing the noise of the airflow when it flows through the silencing device.

In some embodiments, FIG. 36 is a schematic structure diagram of a silencing structure according to some embodiments of the present disclosure. As shown in FIGs. 35 and 36, the silencing structure 2260 includes a first silencing structure 2261 and a second silencing structure 2262 which are opposite to and spaced apart from each. Both of the first silencing structure 2261 and the second silencing structure 2262 extend from the hood body wind outlet 271 to the wind outlet 2280 of the fan bin to form a wind exit path 2290 of the fan bin 2200. The specific structures of the first silencing structure 2261 and the second silencing structure 2262 may be set according to the space in the fan bin. As shown in FIGs. 35 and 36, for example, the first silencing structure 2261 is in a shape of a flat plate, and the second silencing structure 2262 is in a shape of a triangular prism. For example, the wind exit path 2290 is formed by the mutually parallel surfaces of the first silencing structure 2261 and the second silencing structure 2262 in a sandwiching manner.

In the above embodiment, the number of the silencing structures 2260 is two. In other embodiments, the number of the silencing structures may be more, as long as they can form a wind exit path in a commonly sandwiching manner. The wind exit path is not necessarily a linear-type wind path as shown in FIG. 35, but also an arc-shaped wind path, a curved-type wind path, and the like.

In some embodiments, at least one of the first silencing structure 2261 and the second silencing structure 2262 includes a silencing shell 2263 and a silencing material 2264. The silencing shell 2263 is, for example, of a bracket structure made of a material such as plastic or metal; and the silencing material 2264, such as silencing cotton, is detachably accommodated in the silencing shell 2263. A plurality of silencing holes 22631 is formed in one side, facing the wind exit path 2290, of the silencing shell 2263, such that airflow circulating in the wind exit path 2290 can pass through the silencing holes 22631 to be in contact with the silencing material 2264, thereby reducing the noise of the airflow during flowing.

In some embodiments, as shown in FIGs. 35 and 36, the plurality of silencing holes 22631 is arranged in an array on the side, facing the wind exit path 2290, of the silencing shell 2263.

In some embodiments, as shown in FIGs. 35 and 36, the plurality of silencing holes 22631 is, for example, circular. In other embodiments, the plurality of silencing holes 22631 may be square, rectangular, oval, triangular, diamond-shaped, etc.

In some embodiments, the size and number of the silencing holes may be designed according to actual needs, and are related to a noise frequency band of the airflow in the wind exit path 2290.

In some embodiments, the height of the silencing structure 2260 is substantially equal to the internal height of the fan bin 2200.

In some embodiments, the silencing structure 2260 is detachably provided in the fan bin 2200, facilitating maintenance or replacement of the silencing structure 2260.

A dust collection system is further provided according to the embodiments of the present disclosure, and includes: the self-cleaning dust collection holder according to any one of the above embodiments, and automatic cleaning equipment such as a sweeper, a mopping machine, or an all-in-one sweeping and mopping machine.

In the self-cleaning dust collection holder provided according to the embodiments of the present disclosure, through the dust collection system, the garbage in the dust box of automatic cleaning equipment is centralizedly collected into the dust collection bin of the self-cleaning dust collection holder; and through the dust bag bracket and the dust bag which are provided in the dust collection bin, the garbage in the dust box is transferred into the dust bag located in the dust collection bin basically without leakage, such that the number of the garbage disposal times for the user can be reduced, improving the user experience.

Finally, it should be noted that the various embodiments in the Description are described in a progressive manner, each embodiment focuses on the differences from the other embodiments, and the same or similar parts among the various embodiments may refer to one another.

The above embodiments are only used to illustrate the technical solutions of the present disclosure and are not intended to limit the present invention. Although the present disclosure has been described in detail with reference to the foregoing embodiments, those of ordinary skill in the art should understand that: they can still make modifications to the technical solutions described in the foregoing embodiments, or make equivalent substitutions to some of the technical features; and these modifications or substitutions do not deviate the nature of the corresponding technical solutions from the spirit and scope of the technical solutions of the various embodiments of the present disclosure.

## Claims

1. A self-cleaning dust collection holder, comprising: a self-cleaning dust collection holder body comprising:
a water storage chamber provided at a top of the self-cleaning dust collection holder body and configured to accommodate a water storage tank;
a dust collection chamber provided, side by side with the water storage chamber, at the top of the self-cleaning dust collection holder body and configured to accommodate a dust collection hood; and
a wind duct provided from bottom to top along the self-cleaning dust collection holder body, wherein a dust collection port on a base of the self-cleaning dust collection holder body and the dust collection chamber are connected through the wind duct.

2. The self-cleaning dust collection holder according to claim 1, wherein a boss is provided in the water storage chamber, is attached to a rear wall of the water storage chamber, and extends upwardly from a bottom of the water storage chamber to a height lower than the rear wall of the water storage chamber; and a plurality of raised openings is formed in a top of the boss, and is configured to be connected to the water storage tank.

3. The self-cleaning dust collection holder according to claim 1, wherein
an opening of the water storage chamber and/or the dust collection chamber is oriented upward and forward.

4. The self-cleaning dust collection holder according to claim 3, wherein
the water storage chamber and the dust collection chamber are formed by the rear wall, a front wall and a side wall of the self-cleaning dust collection holder body in a surrounding manner, wherein the rear wall of the self-cleaning dust collection holder body is higher than the front wall of the self-cleaning dust collection holder body, and the side wall of the self-cleaning dust collection holder body connects the rear wall and the front wall.

5. The self-cleaning dust collection holder according to claim 1, further comprising: a sewage tank and a clean water tank provided side by side on the water storage chamber, and the dust collection hood provided on the dust collection chamber and side by side with the sewage tank and the clean water tank.

6. The self-cleaning dust collection holder according to claim 5, wherein a vertically extending partition is provided in the water storage chamber, and divides the water storage chamber into two parts, one part for accommodating the sewage tank and the other part for accommodating the clean water tank.

7. The self-cleaning dust collection holder according to claim 6, wherein the sewage tank and the clean water tank are partially located outside the water storage chamber when the sewage tank and the clean water tank are assembled in the water storage chamber; and the dust collection hood is partially located outside the dust collection chamber when the dust collection hood is assembled on the dust collection chamber.

8. The self-cleaning dust collection holder according to claim 2, wherein the raised openings comprise:
an air pump opening and a sewage tank connection opening, provided in an upper part of the boss and corresponding to an assembling position of the sewage tank; and
a clean water tank connection opening, provided in the upper part of the boss and corresponding to an assembling position of the clean water tank.

9. The self-cleaning dust collection holder according to claim 1, wherein the dust collection hood comprises an opening in sealed connection with an end face of the dust collection chamber.

10. The self-cleaning dust collection holder according to claim 1, wherein a washing chamber provided with a forward opening is formed at a lower part of the self-cleaning dust collection holder body, and the washing chamber is adapted to automatic cleaning equipment.

11. The self-cleaning dust collection holder according to claim 10, wherein a washing tank is provided in the washing chamber, and is configured to clean a cleaning part of the automatic cleaning equipment after the automatic cleaning equipment is in adapted connection with the washing chamber.

12. The self-cleaning dust collection holder according to claim 10, wherein
the dust collection port and the washing tank are provided, one behind the other, in a substantially parallel manner on the base of the self-cleaning dust collection holder body.

13. The self-cleaning dust collection holder according to claim 1, further comprising:
a bottom plate of the self-cleaning dust collection holder, wherein the bottom plate of the self-cleaning dust collection holder is detachably connected to the self-cleaning dust collection holder body.

14. The self-cleaning dust collection holder according to claim 1, further comprising: the wind duct is at least partially provided on a side wall of the self-cleaning dust collection holder body.

15. A dust collection system, comprising: automatic cleaning equipment, and the self-cleaning dust collection holder according to any one of claims 1 to 14.

16. A self-cleaning dust collection holder, comprising: a self-cleaning dust collection holder body comprising:
a water storage chamber and a dust collection chamber provided side by side at a top of the self-cleaning dust collection holder body, wherein
a water storage tank is removably provided in the water storage chamber; a dust collection hood removably sleeves the dust collection chamber to form a closed dust collection bin for dust collection; and in an assembling state, an opening of the water storage tank is oriented upward, and an opening of the dust collection hood is oriented downward.

17. The self-cleaning dust collection holder according to claim 16, wherein
the water storage chamber and the dust collection chamber are formed by a rear wall, a front wall and a side wall of the self-cleaning dust collection holder body in a surrounding manner, wherein the rear wall of the self-cleaning dust collection holder body is higher than the front wall of the self-cleaning dust collection holder body, and the side wall of the self-cleaning dust collection holder body connects the rear wall and the front wall.

18. The self-cleaning dust collection holder according to claim 16 or 17, wherein
the water storage tank comprises a sewage tank and a clean water tank; and
a vertically extending partition is provided in the water storage chamber, and divides the water storage chamber into two parts, one part for accommodating the sewage tank and the other part for accommodating the clean water tank.

19. The self-cleaning dust collection holder according to claim 18, wherein the sewage tank and the clean water tank are partially located outside the water storage chamber when the sewage tank and the clean water tank are assembled in the water storage chamber; and the dust collection hood is partially located outside the dust collection chamber when the dust collection hood is assembled in the dust collection chamber.

20. The self-cleaning dust collection holder according to claim 16, wherein the opening of the dust collection hood is in sealed connection with an end face of the dust collection chamber.

21. A dust collection system, comprising: automatic cleaning equipment, and the self-cleaning dust collection holder according to any one of claims 16 to 20.

22. A self-cleaning dust collection holder, comprising: a self-cleaning dust collection holder body comprising:
a water storage chamber and a dust collection chamber provided side by side at a top of the self-cleaning dust collection holder body, wherein openings of the water storage chamber and the dust collection chamber are oriented upward and forward;
a water storage tank is removably provided in the water storage chamber, and a partial tank body of the water storage tank is located outside the water storage chamber; and a dust collection hood is removably provided in the dust collection chamber, and a partial hood body of the dust collection hood is exposed outside the dust collection chamber.

23. The self-cleaning dust collection holder according to claim 22, wherein
the water storage chamber and the dust collection chamber are formed by a rear wall, a front wall and a side wall of the self-cleaning dust collection holder body in a surrounding manner, wherein the rear wall of the self-cleaning dust collection holder body is higher than the front wall of the self-cleaning dust collection holder body, and the side wall of the self-cleaning dust collection holder body connects the rear wall and the front wall.

24. The self-cleaning dust collection holder according to claim 22, further comprising a sewage tank and a clean water tank provided side by side on the water storage chamber, and the dust collection hood provided on the dust collection chamber and side by side with the sewage tank and the clean water tank.

25. The self-cleaning dust collection holder according to claim 24, wherein a vertically extending partition is provided in the water storage chamber, and divides the water storage chamber into two parts, one part for accommodating the sewage tank and the other part for accommodating the clean water tank.

26. The self-cleaning dust collection holder according to claim 25, wherein the sewage tank and the clean water tank are partially located outside the water storage chamber when the sewage tank and the clean water tank are assembled in the water storage chamber; and the dust collection hood is partially located outside the dust collection chamber when the dust collection hood is assembled in the dust collection chamber.

27. The self-cleaning dust collection holder according to claim 22, wherein the dust collection hood comprises an opening in sealed connection with an end face of the dust collection chamber.

28. A dust collection system, comprising: automatic cleaning equipment, and the self-cleaning dust collection holder according to any one of claims 22 to 27.
